# EUROPEAN PATENT SPECIFICATION

(11) **EP 3 988 837 B1**
(45) Date of publication and mention of the grant of the patent: **12.06.2024**
(21) Application number: 20826436.6
(22) Date of filing: 08.06.2020
(51) Int. Cl.: F21S 45/00, F21W 102/00, F21W 103/00, F21W 103/10, F21W 103/20, B60S 1/54, B60S 1/56

(54) **VEHICULAR AIR CURTAIN SYSTEM**
FAHRZEUGLUFTVORHANGSYSTEM
SYSTÈME DE RIDEAU D'AIR DE VÉHICULE

(30) Priority: 19.06.2019 JP 2019113841; 19.06.2019 JP 2019113842; 19.06.2019 JP 2019113843; 19.06.2019 JP 2019113844
(43) Date of publication of application: 27.04.2022
(73) Proprietor: KOITO MANUFACTURING CO., LTD., Minato-ku Tokyo 108-8711 (JP)
(72) Inventor: MATSUNAGA Takahiro, Shizuoka-shi, Shizuoka 424-8764 (JP); KUBOTA Akinobu, Shizuoka-shi, Shizuoka 424-8764 (JP); SATO Masaaki, Shizuoka-shi, Shizuoka 424-8764 (JP); SAKAI Masaru, Shizuoka-shi, Shizuoka 424-8764 (JP); ICHIKAWA Yasuhiro, Shizuoka-shi, Shizuoka 424-8764 (JP); SUZUKI Kazuhiro, Shizuoka-shi, Shizuoka 424-8764 (JP); FUNAMI Yusuke, Shizuoka-shi, Shizuoka 424-8764 (JP); HAYAMI Toshihisa, Shizuoka-shi, Shizuoka 424-8764 (JP)
(74) Representative: Cabinet Beau de Loménie
(86) International application number: PCT/JP2020/022561
(87) International publication number: WO 2020/255780

(56) References cited:
- WO-A1-2018/043743
- WO-A1-2018/230255
- WO-A1-2019/106930
- CN-A- 104 149 748
- DE-U1-202017 005 995
- JP-A- S63 279 953
- JP-A- 2017 178 279
- JP-A- 2018 114 853
- JP-A- 2019 070 596
- US-A1- 2014 104 426
- US-A1- 2018 361 997
- US-A1- 2019 202 411
- US-B2- 9 180 840

## Description

### TECHNICAL FIELD

The present invention relates to a vehicular air curtain system.

### BACKGROUND ART

In recent years, the number of vehicles equipped with an in-vehicle camera to shoot vehicle surroundings is increasing. A lens of the in-vehicle camera, which is an imaging surface, may become dirty due to a raindrop, mud, or the like. Known in the related art is a device for removing a foreign object by ejecting cleaning liquid, compressed air, and the like to the lens of the in-vehicle camera in order to remove a foreign object, such as a drop of water, adhering to the lens.

For example, Patent Literature 1 discloses a vehicular cleaner system including a nozzle that ejects cleaning liquid and high-pressure air toward a cleaning surface of an in-vehicle camera. The nozzle disclosed in Patent Literature 1 has a first ejection port for ejecting the cleaning liquid toward the cleaning surface and a second ejection port for ejecting the high-pressure air toward the cleaning surface.

Patent Literature 2 discloses a vehicular cleaner that cleans an in-vehicle camera by blowing air onto the in-vehicle camera at a high pressure.
US 9180840 B2 discloses a camera washing device for camera lens.

### CITATION LIST

### PATENT LITERATURE

Patent Literature 1: WO 2018/123517 A1; Patent Literature 2: JP2001-171491A

### SUMMARY OF INVENTION

### TECHNICAL PROBLEM

In the vehicular cleaner system disclosed in Patent Literature 1, the ejection port of the cleaning liquid and the ejection port of the high-pressure air are provided in the same nozzle. As a result, when the high-pressure air is ejected during the ejection of the cleaning liquid, the cleaning liquid may be foamed by blowing the high-pressure air to the cleaning liquid at high speed. Therefore, the arrangement of the ejection port of the air to the ejection port of the cleaning liquid needs to be improved.

In addition, in the vehicular cleaner system disclosed in Patent Literature 1, when the high-pressure air is ejected during the ejection of the cleaning liquid, the cleaning liquid foamed by the high-pressure air accumulates in the ejection port, and thus the vehicular cleaner system needs to be improved in order to maintain ejection performance of the cleaning liquid.

Further, the inventors of the present invention conceived a device for preventing water, snow, dust, and the like from adhering to, unlike the cleaner disclosed in Patent Literature 2, a sensor such as a camera. This is because once snow adheres to the camera, it is very difficult to remove the snow.

In a traveling environment in which foreign objects are liable to adhere, however, since such a device is continuously operated for a long time, power consumption is prone to increase.

An object of the present invention is to provide a vehicular cleaner system that cleans a cleaning object mounted on a vehicle with cleaning liquid and air and can prevent the cleaning liquid from being foamed.

Another object of the present invention is to provide a vehicular cleaner system that prevents a foreign object from adhering to a cleaning object mounted on a vehicle by an air curtain, washes off an adhering foreign object with cleaning liquid, and can maintain ejection performance of the cleaning liquid.

Another object of the present invention is to provide a vehicular air curtain device and a vehicular cleaner system that can reduce power consumption.

Another object of the present invention is to provide a vehicular air curtain system that is operated only when necessary to reduce power consumption.

### SOLUTION TO PROBLEM

In order to achieve at least one of the above objects, a vehicular cleaner system according to one unclaimed aspect of the present disclosure is a system for cleaning a cleaning object mounted on a vehicle, the vehicular cleaner system includes:
a washer configured to eject cleaning liquid toward the cleaning object from a liquid nozzle; and
a blower configured to eject air toward the cleaning object from an air nozzle, in which
directions of ejection ports of the liquid nozzle and the air nozzle are perpendicular to each other.

According to the vehicular cleaner system of the present aspect, the directions of the ejection ports of the liquid nozzle and the air nozzle are perpendicular to each other, and thus the ejection ports of the liquid nozzle and the air nozzle are arranged apart to a certain extent. Accordingly, it is possible to prevent the cleaning liquid from being foamed by the ejection of the air and to clean the cleaning object effectively.

In order to achieve at least one of the above objects, a vehicular cleaner system according to another unclaimed aspect of the present disclosure is a system for cleaning a cleaning object mounted on a vehicle, the vehicular cleaner system includes:
a washer configured to eject cleaning liquid toward the cleaning object from a liquid nozzle;
an air curtain device configured to send air continuously to the cleaning object at a predetermined wind speed or a predetermined air flow rate from an air nozzle to prevent dirt from adhering to the cleaning object; and
a control unit configured to control the washer and the air curtain device, in which
the control unit controls the air curtain device to reduce a wind speed or an air flow rate of the air ejected from the air nozzle while the cleaning liquid is being ejected from the liquid nozzle.

According to the vehicular cleaner system of the present aspect, it is possible to prevent a foreign object from adhering to the cleaning object by an air curtain formed by the air ejected from the air nozzle and to wash off an adhering foreign object with the cleaning liquid. In addition, it is possible to prevent an adverse effect of the air curtain, such as a problem that the cleaning liquid is foamed by the air continuously blown above a certain wind speed (air flow rate) during the ejection of the cleaning liquid and the foam from accumulating in the ejection port of the liquid nozzle. Accordingly, it is possible to maintain ejection performance of the cleaning liquid.

In order to achieve at least one of the above objects, a vehicular cleaner system according to another unclaimed aspect of the present disclosure is a system for cleaning a cleaning object mounted on a vehicle, the vehicular cleaner system includes:
a washer configured to eject cleaning liquid toward the cleaning object from a liquid nozzle;
an air curtain device configured to send air continuously to the cleaning object at a predetermined wind speed or a predetermined air flow rate from an air nozzle to prevent dirt from adhering to the cleaning object; and
a control unit configured to control the washer and the air curtain device, in which
the control unit stops, based on an operation signal for operating the washer, power supply to a first motor configured to drive the air curtain device.

According to the vehicular cleaner system of the present aspect, it is possible to curb an adverse effect of the air curtain during the ejection of the cleaning liquid. Accordingly, it is possible to maintain ejection performance of the cleaning liquid.

In order to achieve at least one of the above objects, a vehicular air curtain device according to another unclaimed aspect of the present disclosure is a vehicular air curtain device configured to send continuously, based on an operation signal, air to a sensor or a sensor cover mounted on a vehicle at a predetermined wind speed or a predetermined air flow rate in order to prevent dirt from adhering to the sensor or the sensor cover, the vehicular air curtain device includes:
an air blowing mechanism;
a motor configured to drive the air blowing mechanism; and
an air curtain control unit configured to change a drive voltage or a drive current of the motor in accordance with a predetermined condition.

According to another aspect of the present disclosure, a vehicular cleaner system includes:
the vehicular air curtain device described above;
a cleaner device configured to wash off dirt adhering to the sensor or the sensor cover mounted on the vehicle; and
an integrative control unit configured to control the vehicular air curtain device and the cleaner device.

In order to achieve at least one of the above objects, a vehicular air curtain system according to an aspect of the present invention is a vehicular air curtain system as defined in claim 1, including:
a vehicular air curtain device configured to send air continuously to a sensor or a sensor cover mounted on a vehicle at a predetermined wind speed or a predetermined air flow rate to prevent dirt from adhering to the sensor or the sensor cover;
an information acquisition unit configured to acquire information indicating bad weather; and
a control unit configured to control the vehicular air curtain device, in which
the control unit operates the vehicular air curtain device based on the information indicating bad weather acquired by the information acquisition unit.

According to the vehicular air curtain system of an unclaimed aspect, the vehicular air curtain device is operated only when it is determined that it is raining or snowing. Accordingly, the power consumption of the system can be reduced.

### ADVANTAGEOUS EFFECTS OF INVENTION

According to the present invention, it is possible to provide a vehicular cleaner system that can clean a cleaning object mounted on a vehicle with cleaning liquid and air, and can prevent the cleaning liquid from being foamed.

According to the present invention, it is possible to provide a vehicular cleaner system that prevents a foreign object from adhering to the cleaning object mounted on the vehicle by an air curtain, washes off an adhering foreign object with cleaning liquid, and can maintain ejection performance of the cleaning liquid.

According to the present invention, it is possible to provide a vehicular air curtain device and a vehicular cleaner system that can reduce power consumption.

According to the present invention, it is possible to provide a vehicular air curtain system that is operated only when necessary to reduce power consumption.

### BRIEF DESCRIPTION OF DRAWINGS

FIG. 1 is a top view showing a vehicle equipped with a vehicular cleaner system according to a first embodiment.
FIG. 2 is a block diagram showing a vehicle system.
FIG. 3 is a block diagram showing the vehicular cleaner system of FIG. 1.
FIG. 4 is a perspective view showing an example of a cleaning object, and a cleaner device and an air curtain device that are provided in the vehicular cleaner of FIG. 1.
FIG. 5 is a perspective view showing the cleaner device shown of FIG. 4.
FIG. 6 is a view showing rotation of liquid nozzles of the cleaner device of FIG. 4.
FIG. 7 is an exploded perspective view showing an air curtain device provided in the cleaner device of FIG. 5.
FIG. 8 is a schematic view showing positions of the cleaner device and the air curtain device attached to a cleaning object.
FIG. 9 is a schematic diagram showing positions of a cleaner device and an air curtain device attached to a cleaning object according to a first modification.
FIG. 10 is a schematic diagram showing a cleaning object, a cleaner device, and an air curtain device according to a second modification.
FIG. 11 is a perspective view showing a cleaning object, a cleaner device, and an air curtain device according to a third modification.
FIG. 12 is a timing chart showing operation signals of an air curtain and a washer and operation states of the air curtain and a cleaner of a cleaner system according to a second embodiment.
FIG. 13 is a timing chart showing operation signals of an air curtain and a washer and operation states of the air curtain and a cleaner of a cleaner system according to a third embodiment.
FIG. 14 is a block diagram showing an air curtain device according to a fourth example.
FIG. 15 is a vehicle side view showing a cleaning object attached to the rear of a vehicle.
FIG. 16 is a block diagram showing a vehicular air curtain system according to a fifth embodiment.
FIG. 17 is a block diagram showing an air curtain device provided in the vehicular air curtain system of FIG. 16.
FIG. 18 is a timing chart showing a relationship between a wiper operation signal and an air curtain operation signal.
FIG. 19 is a timing chart showing a relationship among a wiper operation signal, a temperature around the vehicle, and an air curtain operation signal.
FIG. 20 is a timing chart showing a relationship between image determination and an air curtain operation signal.
FIG. 21 is a timing chart showing a relationship between weather information and an air curtain operation signal.

The Fourth example is not encompassed by the wording of the claims but is considered as useful for understanding the invention.

### DESCRIPTION OF EMBODIMENTS

In the following, embodiments of the present invention will be described with reference to the drawings. Components having the same reference numerals as those already described in the description of embodiments will be omitted for the sake of simplicity. Dimensions of components in the drawings may be different from actual dimensions for the sake of convenience.

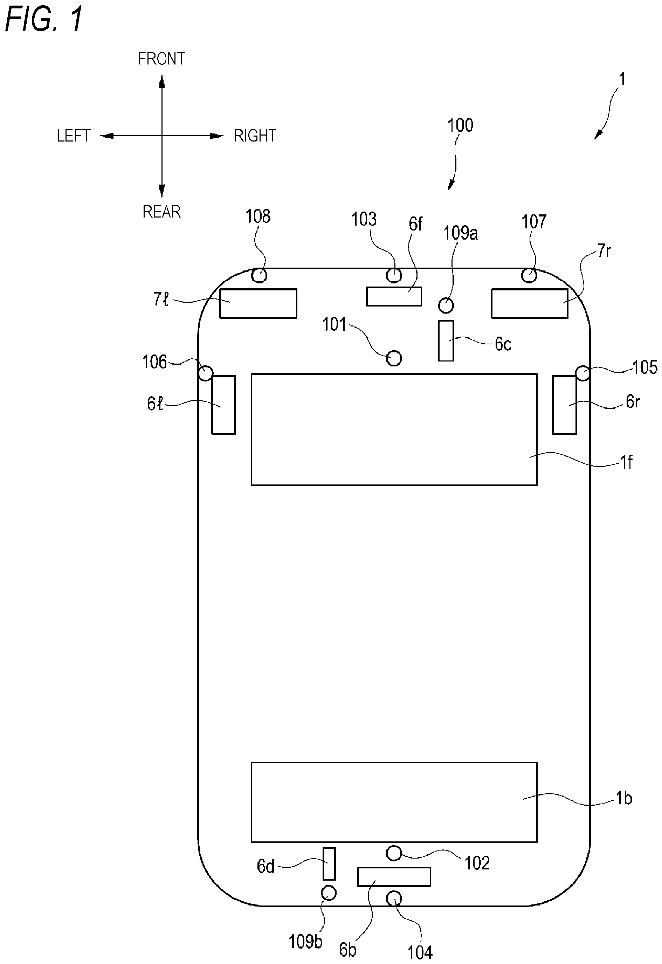

In the description of embodiments, a "left-right direction," a "front-rear direction," and an "upper-lower direction" will be referred to for the sake of convenience. These directions are relative directions set for a vehicle 1 of FIG. 1. The "upper-lower direction" includes an "upper direction" and a "lower direction." The "front-rear direction" includes a "front direction" and a "rear direction." The "left-right direction" includes a "left direction" and a "right direction."

### First Embodiment

FIG. 1 is a top view showing a vehicle 1 equipped with a vehicular cleaner system 100 (hereinafter, referred to as a cleaner system 100) according to a first embodiment. The vehicle 1 includes the cleaner system 100. In the present embodiment, the vehicle 1 can travel in self-driving mode.

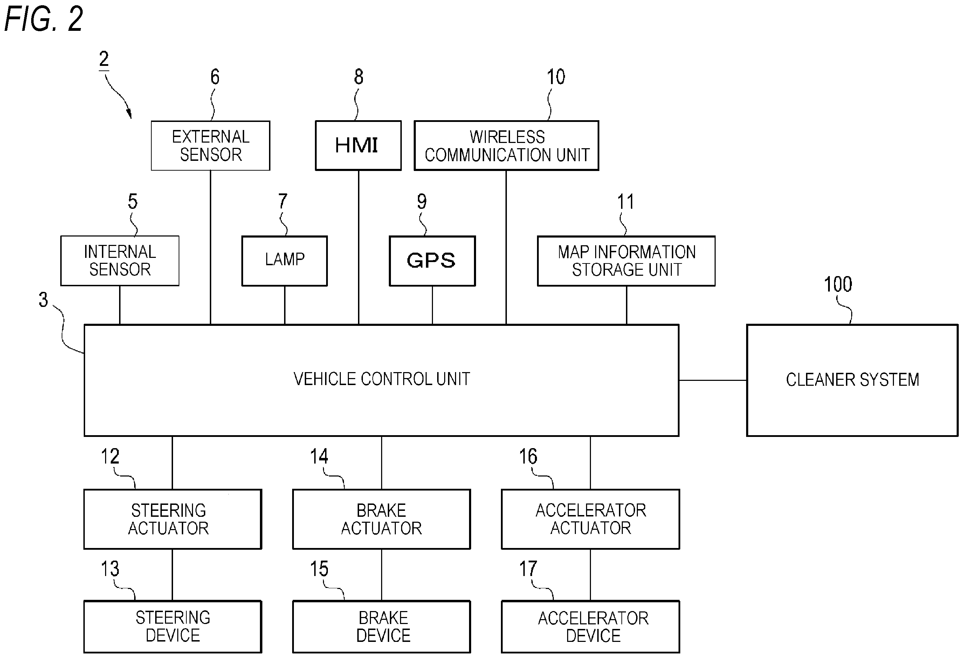

First, a vehicle system 2 of the vehicle 1 will be described with reference to FIG. 2. FIG. 2 is a block diagram showing the vehicle system 2. As shown in FIG. 2, the vehicle system 2 includes: a vehicle control unit 3; an internal sensor 5; an external sensor 6; a lamp 7; a human machine interface (HMI) 8; a global positioning system (GPS) 9; a wireless communication unit 10; and a map information storage unit 11. The vehicle system 2 further includes: a steering actuator 12; a steering device 13; a brake actuator 14; a brake device 15; an accelerator actuator 16; and an accelerator device 17.

The vehicle control unit 3 is configured with an electronic control unit (ECU). The vehicle control unit 3 includes: a processor, such as a central processing unit (CPU); a read-only memory (ROM) storing various vehicle control programs; and a random-access memory (RAM) temporarily storing various vehicle control data. The processor is configured to load a program designated by a vehicle control program stored in the ROM onto the RAM to execute a variety of processing in cooperation with the RAM. The vehicle control unit 3 is configured to control traveling of the vehicle 1.

The internal sensor 5 is configured to acquire information about a host vehicle. The internal sensor 5 is, for example, at least one of an accelerometer, a (vehicle) speed sensor, a wheel speed sensor, and a gyroscope. The internal sensor 5 is configured to acquire information about the host vehicle including a traveling state of the vehicle 1 to output the information to the vehicle control unit 3. The internal sensor 5 may include: a seat occupancy sensor configured to detect whether a driver sits on a driver seat; a face orientation sensor configured to detect an orientation of the driver's face; a motion detector configured to detect whether there is a person in the vehicle; and the like.

The external sensor 6 is configured to acquire information about the outside of the host vehicle. The external sensor is, for example, at least one of a camera, a radar, a LiDAR, and the like. The external sensor 6 is configured to acquire information about the outside of the host vehicle including surroundings (another vehicle, a pedestrian, a road shape, a traffic sign, an obstacle, and the like) of the vehicle 1 to output the information to the vehicle control unit 3. The external sensor 6 may include: a weather sensor (for example, a rain sensor, a hygrometer, a thermometer, and the like) configured to detect weather conditions; an illuminance sensor configured to detect illuminance around the vehicle 1; or the like.

The camera includes, for example, an image sensor, such as a charge-coupled device (CCD) and a complementary metal-oxide-semiconductor (CMOS) and is configured to detect visible light or infrared light.

The radar is a millimeter-wave radar, a microwave radar, a laser radar, or the like.

LiDAR stands for "light detection and ranging" or "laser imaging detection and ranging." In general, LiDAR is a sensor configured to emit invisible light ahead and acquire information, such as a distance to an object, a shape of the object, and a material of the object, based on the emitted light and returned light.

The lamp 7 is at least one of: a headlamp or a position lamp, which are provided at the front of the vehicle 1; a rear combination lamp, which is provided at the rear of the vehicle 1; a turn signal lamp, which is provided at the front or the side of the vehicle; a lamp for conveying a state of the host vehicle to a pedestrian or a driver of another vehicle; and the like.

The HMI 8 includes: an input unit configured to receive an input operation from the driver; and an output unit configured to output traveling information or the like to the driver. The input unit includes: a steering wheel; an accelerator pedal; a brake pedal; a driving-mode selecting switch for switching driving modes of the vehicle 1; a wiper operator for operating a wiper; and the like. The output unit is a display configured to display a variety of traveling information.

The GPS 9 is configured to acquire current location information of the vehicle 1 to output the acquired current location information to the vehicle control unit 3. The wireless communication unit 10 is configured to receive traveling information of another vehicle around the vehicle 1 from the other vehicle and to transmit traveling information of the vehicle 1 to the other vehicle (vehicle-to-vehicle communication). The wireless communication unit 10 is configured to receive infrastructure information from an infrastructure facility, such as traffic lights and a traffic sign, and to transmit traveling information of the vehicle 1 to the infrastructure facility (vehicle-to-infrastructure communication). For example, the wireless communication unit 10 is configured to receive weather information (for example, information of Vehicle Information and Communication System (VICS, registered trademark)) around the host vehicle from the infrastructure facility via a network or the like. The map information storage unit 11 is an external storage device, such as a hard disk drive, configured to store map information and is configured to output the map information to the vehicle control unit 3.

When the vehicle 1 travels in self-driving mode, the vehicle control unit 3 automatically generates, based on the traveling state information, the surrounding information, the current position information, the map information, and the like, at least one of a steering control signal, an accelerator control signal, and a brake control signal. The steering actuator 12 is configured to receive the steering control signal from the vehicle control unit 3 to control the steering device 13 based on the received steering control signal. The brake actuator 14 is configured to receive the brake control signal from the vehicle control unit 3 to control the brake device 15 based on the received brake control signal. The accelerator actuator 16 is configured to receive the accelerator control signal from the vehicle control unit 3 to control the accelerator device 17 based on the received accelerator control signal. In this way, traveling of the vehicle 1 is automatically controlled by the vehicle system 2 in the self-driving mode.

On the other hand, when the vehicle 1 travels in manual driving mode, the vehicle control unit 3 generates the steering control signal, the accelerator control signal, and the brake control signal in accordance with the driver's manual operation on the accelerator pedal, the brake pedal, and the steering wheel. In this way, since the steering control signal, the accelerator control signal, and the brake control signal are generated by the driver's manual operation in the manual driving mode, the traveling of the vehicle 1 is controlled by the driver.

Next, driving modes of the vehicle 1 will be described. The driving modes include self-driving mode and manual driving mode. The self-driving mode includes full automation mode, advanced driver assistance mode, and a driver assistance mode. In the full automation mode, the vehicle system 2 automatically performs all of steering control, brake control, and accelerator control, and the driver cannot drive the vehicle 1. In the advanced driver assistance mode, the vehicle system 2 automatically performs all of the steering control, the brake control, and the accelerator control, and the driver can but does not drive the vehicle 1. In the driver assistance mode, the vehicle system 2 automatically performs some of the steering control, the brake control, and the accelerator control, and the driver drives the vehicle 1 with driving assistance of the vehicle system 2. On the other hand, in the manual driving mode, the vehicle system 2 does not automatically perform traveling control, and the driver drives the vehicle 1 without the driving assistance of the vehicle system 2.

The driving modes of the vehicle 1 may be switched by operating the driving-mode selecting switch. In this case, the vehicle control unit 3 switches the driving modes of the vehicle 1 among four driving modes (the full automation mode, the advanced driver assistance mode, the driver assistance mode, and the manual driving mode) in accordance with the driver's operation on the driving-mode selecting switch. The driving modes of the vehicle 1 may be automatically switched based on information indicating a traveling-permitted section in which a self-driving car is permitted to travel or a traveling-prohibited section in which a self-driving car is prohibited from traveling or based on information about weather conditions of the outside. In this case, the vehicle control unit 3 switches the driving modes of the vehicle 1 based on the information described above. In addition, the driving modes of the vehicle 1 may be automatically switched using the seat occupancy sensor, the face orientation sensor, or the like. In this case, the vehicle control unit 3 switches the driving modes of the vehicle 1 based on an output signal from the seat occupancy sensor or the face orientation sensor.

The vehicle 1 of FIG. 1 includes, as the external sensor 6, a front LiDAR 6f, a rear LiDAR 6b, a right LiDAR 6r, a left LiDAR 61, a front camera 6c, and a rear camera 6d. The front LiDAR 6f is configured to acquire information about the front side of the vehicle 1. The rear LiDAR 6b is configured to acquire information about the rear side of the vehicle 1. The right LiDAR 6r is configured to acquire information about the right side of the vehicle 1. The left LiDAR 61 is configured to acquire information about the left side of the vehicle 1. The front camera 6c is configured to acquire information about the front side of the vehicle 1. The rear camera 6d is configured to acquire information about the rear side of the vehicle 1.

Although the front LiDAR 6f is provided at the front of the vehicle 1, the rear LiDAR 6b is provided at the rear of the vehicle 1, the right LiDAR 6r is provided at the right of the vehicle 1, and the left LiDAR 61 is provided at the left of the vehicle 1 in the example of FIG. 1, the present invention is not limited thereto. For example, the front LiDAR, the rear LiDAR, the right LiDAR, and the left LiDAR may be disposed together at a roof of the vehicle 1.

The vehicle 1 includes, as the lamp 7, a right headlamp 7r and a left headlamp 71. The right headlamp 7r is provided in the right of the front of the vehicle 1, and the left headlamp 71 is provided in the left of the front of the vehicle 1. The right headlamp 7r is provided to the right of the left headlamp 71.

The vehicle 1 includes a front window 1f and a rear window 1b.

The vehicle 1 includes the cleaner system 100 according to an embodiment of the present invention. The cleaner system 100 is a system to remove a foreign object, such as a drop of water, mud, and dust, adhering to a cleaning object or to prevent a foreign object from adhering to the cleaning object.

In the present embodiment, the cleaner system 100 includes: a front window washer unit (hereinafter, referred to as a front WW) 101 configured to clean the front window 1f; and a rear window washer unit (hereinafter, referred to as a rear WW) 102 configured to clean the rear window 1b.

The cleaner system 100 further includes: a front LiDAR cleaner unit (hereinafter, referred to as a front LC) 103 configured to clean the front LiDAR 6f; and a rear LiDAR cleaner unit (hereinafter, referred to as a rear LC) 104 configured to clean the rear LiDAR 6b.

The cleaner system 100 further includes: a right LiDAR cleaner unit (hereinafter, referred to as a right LC) 105 configured to clean the right LiDAR 6r; and a left LiDAR cleaner unit (hereinafter, referred to as a left LC) 106 configured to clean the left LiDAR 61.

The cleaner system 100 further includes: a right headlamp cleaner unit (hereinafter, referred to as a right HC) 107 configured to clean the right headlamp 7r; and a left headlamp cleaner unit (hereinafter, referred to as a left HC) 108 configured to clean the left headlamp 71.

The cleaner system 100 further includes: a front camera cleaner unit 109a configured to clean the front camera 6c; and a rear camera cleaner unit 109b configured to clean the rear camera 6d. Each of the cleaners 101 to 109b includes one or more nozzles and is configured to eject a cleaning medium, such as cleaning liquid and air, from the nozzles toward the cleaning object.

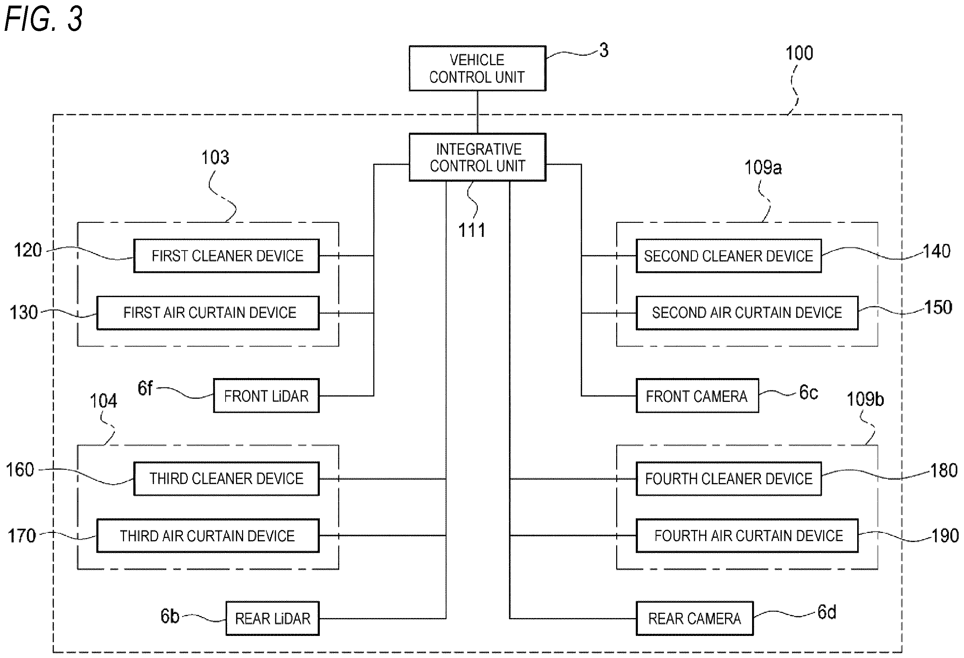

FIG. 3 is a block diagram showing the cleaner system 100. The cleaner system 100 includes: the cleaners 101 to 109b described above; and an integrative control unit 111 configured to control the cleaners 101 to 109b. In FIG. 3, the front LC 103, the front camera cleaner unit 109a, the rear LC 104, and the rear camera cleaner unit 109b out of the cleaners 101 to 109b described above are shown, and the front WW 101, the rear WW 102, the right LC 105, the left LC 106, the right HC 107, and the left HC 108 are not shown.

The front LC 103 includes: a first cleaner device 120 (an example of a washer) configured to wash off dirt, such as a foreign object, adhering to the front LiDAR 6f; and a first vehicular air curtain device 130 (an example of a blower) configured to prevent dirt, such as a foreign object, from adhering to the front LiDAR 6f. Hereinafter, a vehicular air curtain device is referred to as an air curtain device.

The front camera cleaner unit 109a includes: a second cleaner device 140 (an example of the washer) configured to wash off dirt, such as a foreign object, adhering to the front camera 6c; and a second air curtain device 150 (an example of the blower) configured to prevent dirt, such as a foreign object, from adhering to the front camera 6c.

The rear LC 104 includes: a third cleaner device 160 (an example of the washer) configured to wash off dirt, such as a foreign object, adhering to the rear LiDAR 6b; and a third air curtain device 170 (an example of the blower) configured to prevent dirt, such as a foreign object, from adhering to the rear LiDAR 6b.

The rear camera cleaner unit 109b includes: a fourth cleaner device 180 (an example of the washer) configured to wash off dirt, such as a foreign object, adhering to the rear camera 6d; and a fourth air curtain device 190 (an example of the blower) configured to prevent a foreign object from adhering to the rear camera 6d.

The air curtain device is configured to produce an air curtain that prevents a foreign object, such as dust and a drop of water, from adhering to a cleaning object by continuously blowing air at a predetermined wind speed or a predetermined air flow rate to the cleaning object, for example, the external sensor 6 such as a vehicle lamp, a LiDAR, and a camera, the sensor cover, and the like to cause a constant air flow to flow constantly on a surface of the cleaning object. The predetermined wind speed or the predetermined air flow rate of the continuously blown air refers to a wind speed or an air flow rate at which the air curtain can be produced that prevents a foreign object from adhering to a cleaning surface 21 of the LiDAR 6f. The predetermined wind speed and the predetermined air flow rate are adjusted according to a vehicle speed. When a vehicle speed is low, a wind speed is set to be low. When a vehicle speed is high, a wind speed is set to be high.

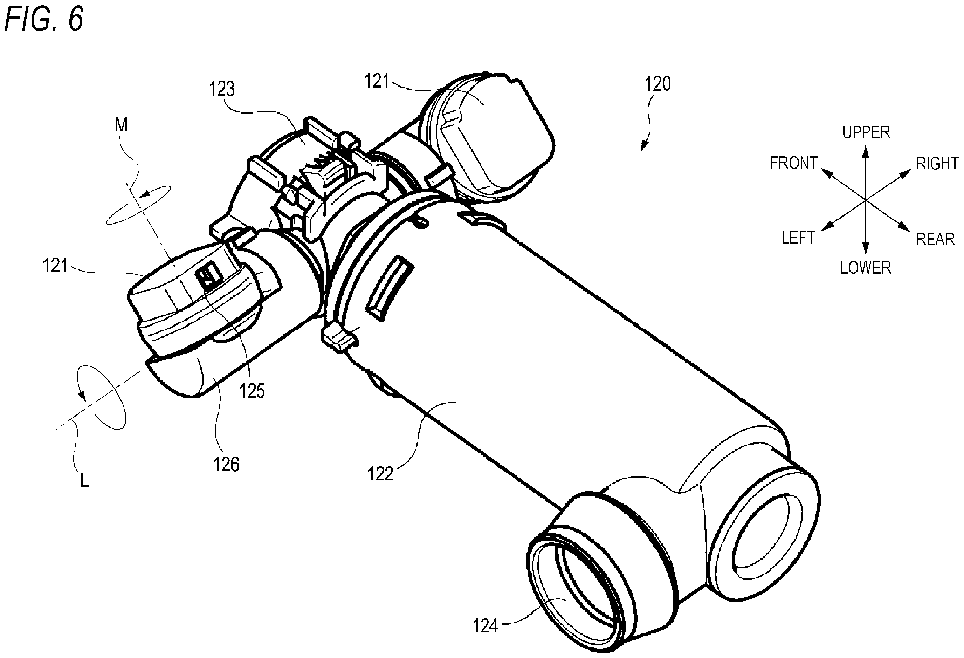

Each of the cleaner devices 120, 140, 160, and 180 is provided with a cleaner control unit (not shown). Each of the air curtain devices 130, 150, 170, and 190 is provided with an air curtain control unit (to be described later with reference to FIG. 6). The cleaner control units and the air curtain control units are electrically connected to the integrative control unit 111. The cleaner control units and the air curtain control units control operation of the cleaner devices 120, 140, 160, and 180 and the air curtain devices 130, 150, 170, and 190 based on control signals from the integrative control unit 111. The integrative control unit 111 is electrically connected to the vehicle control unit 3.

Although the cleaner control units, the air curtain control units, and the integrative control unit 111 are provided as separate components in the present embodiment, these control units may be integrated. In this case, the cleaner control units, the air curtain control units, and the integrative control unit 111 may be configured with a single electronic control unit. Although the vehicle control unit 3 and the integrative control unit 111 are provided as separate components in the present embodiment, the vehicle control unit 3 and the integrative control unit 111 may be integrated. In this case, the vehicle control unit 3 and the integrative control unit 111 may be configured with a single electronic control unit.

The cleaner system 100 shown in the drawings is equipped with sensors including various external sensors 6, such as the front LiDAR 6f and the front camera 6c. The cleaner system 100 may include: a cleaner device configured to remove a foreign object adhering to a sensor (not shown), such as a side camera configured to acquire an image of the side of the vehicle 1; or an air curtain device configured to prevent a foreign object from adhering to the sensor.

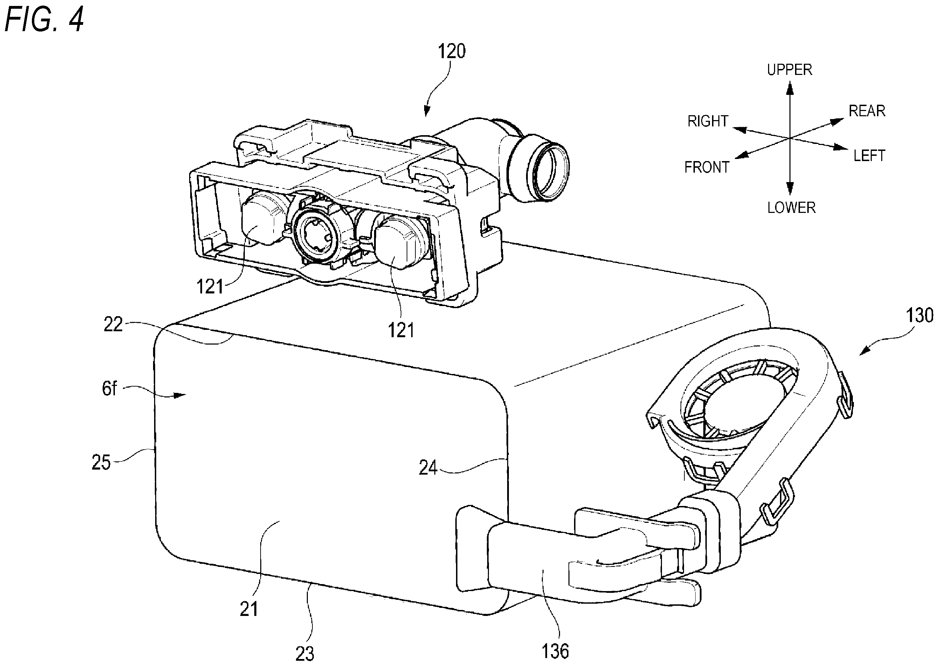

Next, with reference to FIGS. 4 to 8, the cleaning objects, the cleaner devices (washers) configured to eject cleaning liquid toward the cleaning objects, and the air curtain devices (blowers) configured to eject air (wind) toward the cleaning objects will be described in detail.

FIG. 4 shows: the front LiDAR 6f, which is an example of the cleaning objects; the first cleaner device 120 configured to eject cleaning liquid to the front LiDAR 6f; and the first air curtain device 130 configured to eject air to the front LiDAR 6f.

The cleaning surface 21 of the front LiDAR 6f, which is a cleaning object, is formed into, for example, a rectangular shape (a long sideways rectangular shape in the present example). The first cleaner device 120 is configured to spray the cleaning liquid toward the cleaning surface 21 of the front LiDAR 6f from a liquid nozzle 121. The first air curtain device 130 is configured to blow air to the cleaning surface 21 of the front LiDAR 6f from an air nozzle 136. The air nozzle 136 of the first air curtain device 130 is disposed, for example, at a side (left side in the present example) of the front LiDAR 6f.

The liquid nozzle 121 of the first cleaner device 120 is disposed facing the upper side 22 (an example of a first side) of the cleaning surface 21 of the front LiDAR 6f. That is, the liquid nozzle 121 is preferably disposed facing the long side of the long sideways rectangle of the cleaning surface 21. Although the liquid nozzle 121 may be disposed facing the lower side 23 (an example of the first side) of the cleaning surface 21, water, mud, or the like may enter an opening of the liquid nozzle 121 in this case. Thus, the liquid nozzle 121 is preferably disposed facing the upper side 22.

The air nozzle 136 of the first air curtain device 130 is disposed facing the left side 24 (an example of the second side), which is perpendicular to the upper side 22 of the cleaning surface 21 of the front LiDAR 6f. That is, the air nozzle 136 is preferably disposed facing the short side of the long sideways rectangle of the cleaning surface 21. The air nozzle 136 may be disposed facing the right side 25 of the cleaning surface 21.

Since configurations of other cleaning objects and a cleaner device and an air curtain device for each of those cleaning objects are the same as those in FIG. 4, description thereof will be omitted. Those cleaning objects includes: the rear LiDAR 6b, the right LiDAR 6r, the left LiDAR 61, the front camera 6c, and the rear camera 6d, which are external sensors; the right headlamp 7r and the left headlamp 71, which are vehicle lamps; the front window 1f; the rear window 1b; and the like.

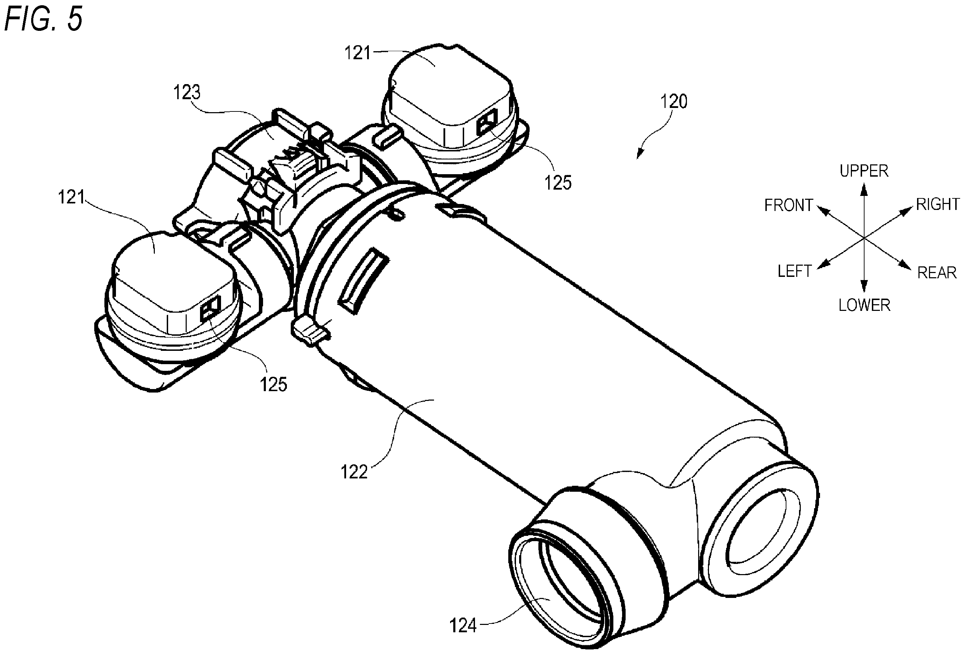

FIG. 5 is a perspective view showing the first cleaner device 120. As shown in FIG. 5, the first cleaner device 120 includes: a cylinder 122; a piston 123; and a pair of liquid nozzles 121 and 121.

The cylinder 122 is formed into a cylindrical shape, and a coupling portion 124 is provided in the rear. A hose for supplying the cleaning liquid is connected to the coupling portion 124. The hose is also connected to a cleaning liquid tank (not shown) configured to store the cleaning liquid. When the hose is connected to the coupling portion 124, the cleaning liquid is supplied from the cleaning liquid tank into the cylinder 122.

The piston 123 is slidably accommodated in the cylinder 122, which has a cylindrical shape. The piston 123 can move forward and backward in a front-rear direction along an axis of the cylinder 122.

The pair of left and right liquid nozzles 121 and 121 are provided around a tip of the piston 123. The liquid nozzles 121 and 121 are each provided with an ejection port 125 for ejecting the cleaning liquid. The liquid nozzles 121 and 121 are configured to eject the cleaning liquid from the ejection ports 125 toward the cleaning surface 21 of the front LiDAR 6f. Since the pair of liquid nozzles 121 and 121 are similar, the left liquid nozzle 121 will be described in the following.

The liquid nozzle 121 is a fluidic nozzle (fluidic oscillating nozzle). A fluidic nozzle is a nozzle configured to change an ejection direction of a fluid by causing the fluid flowing inside the nozzle to interfere. Since the liquid nozzle 121 is a fluidic nozzle, it is possible to eject the cleaning liquid at high pressure toward a wide range of the cleaning surface 21 of the front LiDAR 6f. The liquid nozzle 121 may eject the cleaning liquid from the ejection port 125 without changing the ejection direction of the cleaning liquid.

Although two liquid nozzles 121 are provided in the present example, the present invention is not limited thereto. For example, at the upper side of the front LiDAR 6f, three or more liquid nozzles 121 may be provided abreast or one liquid nozzle 121 may be provided. For example, the liquid nozzle 121 is preferably provided with a wide ejection port correspondingly to the long sideways rectangle of the cleaning surface 21. If a plurality of ejection ports or a wide ejection port is provided, the cleaning liquid can spread to a long sideways rectangle cleaning surface, such as the cleaning surface 21.

FIG. 6 is a view showing rotation of the liquid nozzles 121 in the first cleaner device 120. As shown in FIG. 6, the liquid nozzles 121 are attached to nozzle holders 126. The nozzle holders 126 are attached to the piston 123 being rotatable around an axis L extending in a left-right direction of the piston 123. The liquid nozzles 121 are attached to the nozzle holders 126 being rotatable around an axis M perpendicular to the axis L. If the liquid nozzles 121 and the nozzle holders 126 are appropriately rotated, the ejection ports 125 of the liquid nozzles 121 can be aimed at appropriate positions in accordance with a relative position of the liquid nozzles 121 to the front LiDAR 6f. Accordingly, it is possible to adjust positions of the liquid nozzles 121 to cause the cleaning liquid to hit the front LiDAR 6f appropriately.

The liquid nozzle 121 may be provided at only one side around the tip of the piston 123. Three or more liquid nozzles 121 may be provided along the upper side 22 of the cleaning surface 21. Alternatively, one liquid nozzle 121 may be provided at the tip of the piston 123. In this case, it is preferable for the liquid nozzle 121 to include a wide ejection port correspondingly to the long sideways rectangle of the cleaning surface 21. If a plurality of ejection ports or a wide ejection port is provided, the cleaning liquid can spread to long sideways rectangle of the cleaning surface, such as the cleaning surface 21.

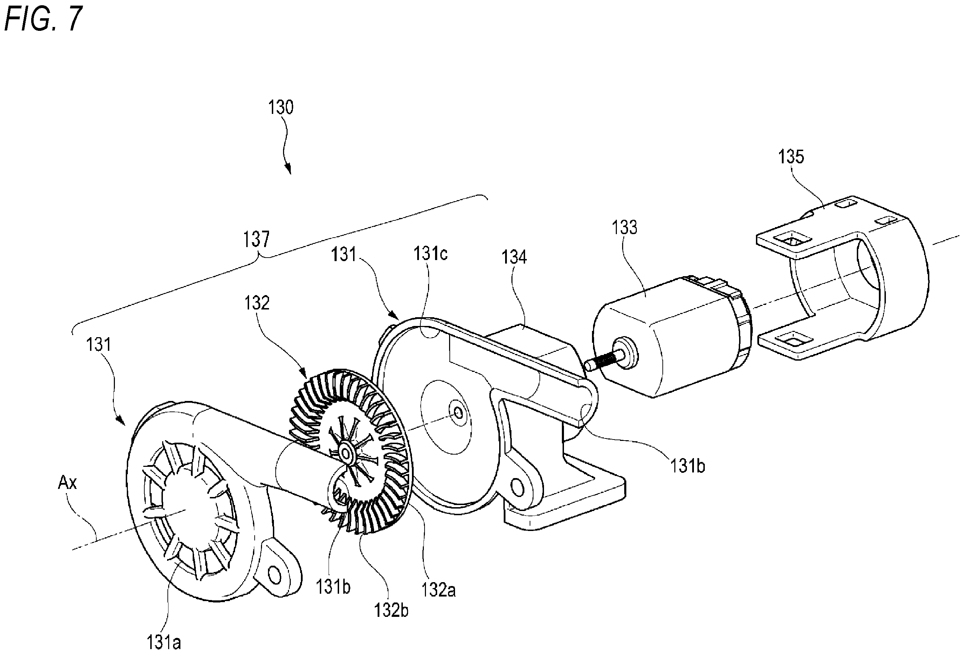

FIG. 7 is an exploded perspective view showing the first air curtain device 130. As shown in FIG. 7, the first air curtain device 130 includes: an air blowing mechanism 137 including a housing 131 and an impeller 132; an air curtain motor 133 (an example of a first motor, which may be referred to as a motor); a frame 134; and a motor case 135.

The impeller 132 of the air blowing mechanism 137 is rotatable around a rotation axis Ax by the air curtain motor 133. The impeller 132 includes a disk-shaped plate 132a and a plurality of blades 132b. The blades 132b is provided extending in a radial direction of the impeller 132 and forming an annular shape on the plate 132a.

The housing 131 covers the impeller 132. The housing 131 is divided into two sides along the rotation axis Ax of the impeller 132. The housing 131 embraces a doughnut-shaped internal space, in which the impeller 132 is accommodated. The housing 131 includes: inlets 131a for inhaling air; and an outlet 131b for exhaling the inhaled air. The inlets 131a are opened along the rotation axis Ax at positions corresponding to the blades 132b of the impeller 132. The outlet 131b is opened in a direction intersecting with the rotation axis Ax of the impeller 132.

When the impeller 132 is rotated, air inhaled from the inlets 131a is pressed against an internal circumferential surface 131c of the housing 131 by the blades 132b. The air pressed is guided along the internal circumferential surface 131c of the housing 131 to the outlet 131b. The air guided to the outlet 131b is exhaled from the outlet 131b to the outside of the first air curtain device 130. That is, the air inhaled along the rotation axis Ax of the impeller 132 is pushed out in the radial direction by the blades 132b rotating, is pressed against the internal circumferential surface 131c of the housing 131, and is exhaled to the outside of the first air curtain device 130 from the outlet 131b, which is opened in the radial direction. The air exhaled to the outside from the outlet 131b is blown toward the cleaning surface 21 of the front LiDAR 6f from the air nozzle 136 (see FIG. 4), which is attached to the outlet 131b. When the impeller 132 having the blades 132b is rotated, air is continuously blown toward the cleaning surface 21. The air blown toward the cleaning surface 21 flows along the cleaning surface 21.

Dust approaching the cleaning surface 21 is carried away from the cleaning surface 21 by the airflow flowing along the cleaning surface 21 and does not adhere to the cleaning surface 21. In this way, the first air curtain device 130 can prevent dust and the like from adhering to the cleaning surface 21.

In addition to the example described above, a propeller fan, a multiblade fan, a turbo fan, a mixed flow fan, or the like may be adopted as the air blowing mechanism of the first air curtain device 130. These non-positive displacement blowing devices can easily obtain a relatively large air flow rate. A positive displacement blowing device, such as a reciprocating compressor, a rotary screw compressor, a roots-type compressor, and a vane compressor, may be adopted as the air blowing mechanism of the first air curtain device 130. The air blowing mechanism may be referred to as a blower, a pump, or the like as well as a fan.

In FIGS. 4 and 5, the cleaner device and the air curtain device for the front LiDAR 6f are shown. Cleaner devices and air curtain devices for other cleaning objects are similar, and thus description thereof will be omitted. Those cleaning objects include: the rear LiDAR 6b, the right LiDAR 6r, the left LiDAR 61, the front camera 6c, and the rear camera 6d, which are external sensors; and sensor covers of these external sensors. Those cleaning objects further include: the right headlamp 7r and a left headlamp 71, which are vehicle lamps; the front window 1f and the rear window 1b, which are vehicle windows; and the like.

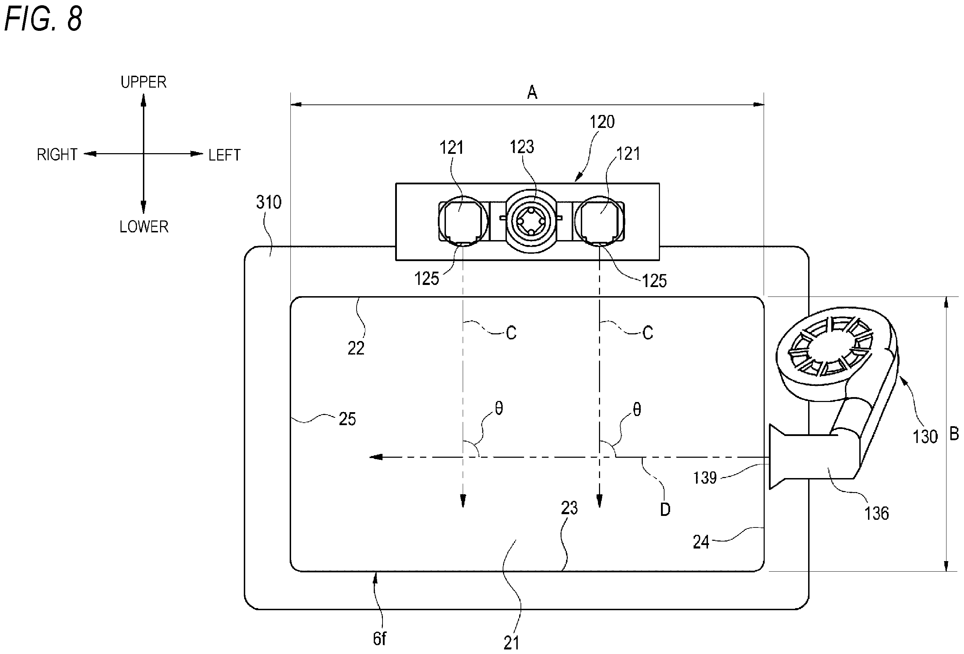

FIG. 8 is a schematic diagram showing the front LiDAR 6f and the first cleaner device 120 and the first air curtain device 130, which are attached to the front LiDAR 6f.

As shown in FIG. 8, the first cleaner device 120 and the first air curtain device 130 are attached to the front LiDAR 6f with a bracket 310. The bracket 310 is provided on, for example, a bumper, a grille, or the like of the vehicle 1.

In a front view of the cleaning surface 21 of the front LiDAR 6f, the first cleaner device 120 is disposed inside a swept region swept out by translating the upper side 22 to the outside of the cleaning surface 21. That is, the first cleaner device 120 is disposed inside a region above the upper side 22 in the front view of the front LiDAR 6f not overlapping with the cleaning surface 21. The first cleaner device 120 is disposed in a width region A of the upper side 22 in the front view of the front LiDAR 6f not protruding from the cleaning surface 21 in the left-right direction.

In the front view of the cleaning surface 21 of the front LiDAR 6f, first air curtain device 130 including the air nozzle 136 is disposed inside a swept region swept out by translating the left side 24 to the outside of the cleaning surface 21. That is, the first air curtain device 130 including the air nozzle 136 is disposed inside a region in the left side of the left side 24 in the front view of the font LiDAR 6f not overlapping with the cleaning surface 21. The first air curtain device 130 including the air nozzle 136 is disposed in a height region B of the left side 24 in the front view of the front LiDAR 6f not protruding from the cleaning surface 21 in the upper-lower direction.

A direction C of the ejection port 125 of the liquid nozzle 121 and a direction D of an ejection port 139 of the air nozzle 136 are set such that an intersection angle *θ* between the direction C and the direction D is in a range of 70° to 110°. The intersection angle *θ* is preferably 90° as shown in FIG. 8.

The cleaning liquid ejected from the ejection port 125 and air ejected from the ejection port 139 widen as they go away from the ejection ports 125 and 139. Therefore, for example, a center line of an ejection range of the cleaning liquid ejected from the liquid nozzle 121 and a center line of an ejection range of the air ejected from the air nozzle 136 may intersect with each other at 70° 110°.

Although the air curtain device has been described in which air is continuously and constantly ejected during operation in the above embodiment, the present invention is not limited thereto. For example, the first air curtain device 130 may be configured to eject high-pressure air toward the cleaning object intermittently. Dirt may adhere to the cleaning object even if air is continuously or intermittently ejected from the air nozzle 136 or when the cleaner system 100 is not operating. Therefore, for example, when it is determined that dirt adhered to the cleaning object or when an input from the driver for operating the first cleaner device 120 is received, the cleaning liquid is ejected from the first cleaner device 120 to the cleaning object to remove the dirt adhering to the cleaning object.

If ejection ports of the cleaning liquid and the high-pressure air are provided in the same nozzle, when the high-pressure air is ejected during the ejection of the cleaning liquid, the high-pressure air is ejected to the cleaning liquid at high speed, and thus the cleaning liquid may be foamed.

Therefore, the cleaner system 100 according to the present embodiment includes: the first cleaner device 120 (an example of the washer) configured to eject the cleaning liquid toward the front LiDAR 6f (an example of the cleaning objects) from the liquid nozzle 121; and the first air curtain device 130 (an example of the blower) configured to eject air toward the front LiDAR 6f from the air nozzle 136. In the cleaner system 100, the direction of the ejection port 125 of the liquid nozzle 121 and the direction of the ejection port 139 of the air nozzle 136 are perpendicular to each other. According to this configuration, if the direction of the ejection port 125 of the liquid nozzle 121 and the direction of the ejection port 139 of the air nozzle 136 are perpendicular to each other, the ejection port 125 of the liquid nozzle 121 and the ejection port 139 of the air nozzle 136 are arranged apart to a certain extent. Therefore, for example, even when air is ejected from the air nozzle 136 during the ejection of the cleaning liquid, the air is prevented from being ejected to the cleaning liquid at high speed. Accordingly, it is possible to prevent the cleaning liquid from being foamed by the ejection of the air and to clean the cleaning object effectively.

According to the cleaner system 100, on the long sideways rectangle of the cleaning surface 21 of the front LiDAR 6f, the liquid nozzle 121 is disposed facing the upper side 22, which is the long side of the cleaning surface 21, and the air nozzle 136 is disposed facing the left side 24, which is the short side of the cleaning surface 21. According to this configuration, the ejection directions of the cleaning liquid and air can be set perpendicular to each other simply. Since the cleaning liquid is ejected to the long sideways rectangle of the cleaning surface 21 from above, the cleaning liquid can easily reach the cleaning surface 21 without resisting the gravity. Since air is continuously ejected to the long sideways rectangle of the cleaning surface 21 from the side, the air can be easily spread to the cleaning surface 21. Accordingly, cleaning can be more effective.

According to the cleaner system 100, the first cleaner device 120 and the first air curtain device 130 are attached to the front LiDAR 6f with the bracket 310. According to this configuration, mountability of the first cleaner device 120 and the first air curtain device 130 to the cleaning object, such as the front LiDAR 6f, is improved. In the front view of the cleaning surface 21, the first cleaner device 120 is disposed inside a region swept out by translating the upper side 22 to the outside of the cleaning surface 21. The first air curtain device 130 is disposed inside a region swept out by translating the left side 24 to the outside of the cleaning surface 21. Accordingly, space can be saved. Good is mountability of the cleaner device and the air curtain device according to the configurations above particularly to a LiDAR out of the cleaning objects.

According to the cleaner system 100, the first air curtain device 130 is configured to produce an air curtain and to send air continuously to the front LiDAR 6f at a predetermined wind speed or a predetermined air flow rate based on the operation signal output from the integrative control unit 111. According to this configuration, it is possible to blow air continuously and widely to the front LiDAR 6f at a large air flow rate and to prevent dirt from adhering to the front LiDAR 6f effectively.

### First Modification

Although the liquid nozzle 121 of the first cleaner device 120 is disposed facing the upper side 22, which is the long side of the cleaning surface 21 of the front LiDAR 6f, and the air nozzle 136 of the first air curtain device 130 is disposed facing the left side 24, which is the short side of the cleaning surface 21 in the embodiment described above, the present invention is not limited thereto.

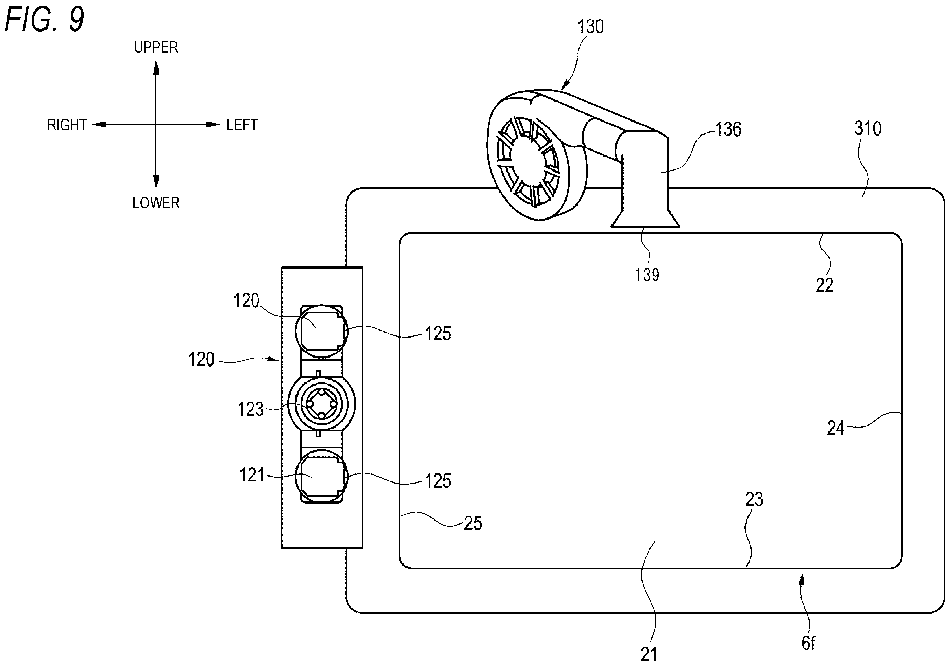

FIG. 9 is a diagram showing a first modification of attachment positions of the first cleaner device 120 and the first air curtain device 130 to the front LiDAR 6f. As shown in FIG. 9, the air nozzle 136 of the first air curtain device 130 may be disposed facing the upper side 22, which is the long side of the cleaning surface 21 of the front LiDAR 6f, and the liquid nozzle 121 of the first cleaner device 120 may be disposed facing a right side 25 that is the short side of the cleaning surface 21. In the front view of the cleaning surface 21 of the front LiDAR 6f, a region in which the first cleaner device 120 and the first air curtain device 130 including the air nozzle 136 is similar to the embodiment described earlier. An intersection angle between the direction of the ejection port 125 of the liquid nozzle 121 and the direction of the ejection port 139 of the air nozzle 136 is also similar to the embodiment described earlier.

### Second Modification

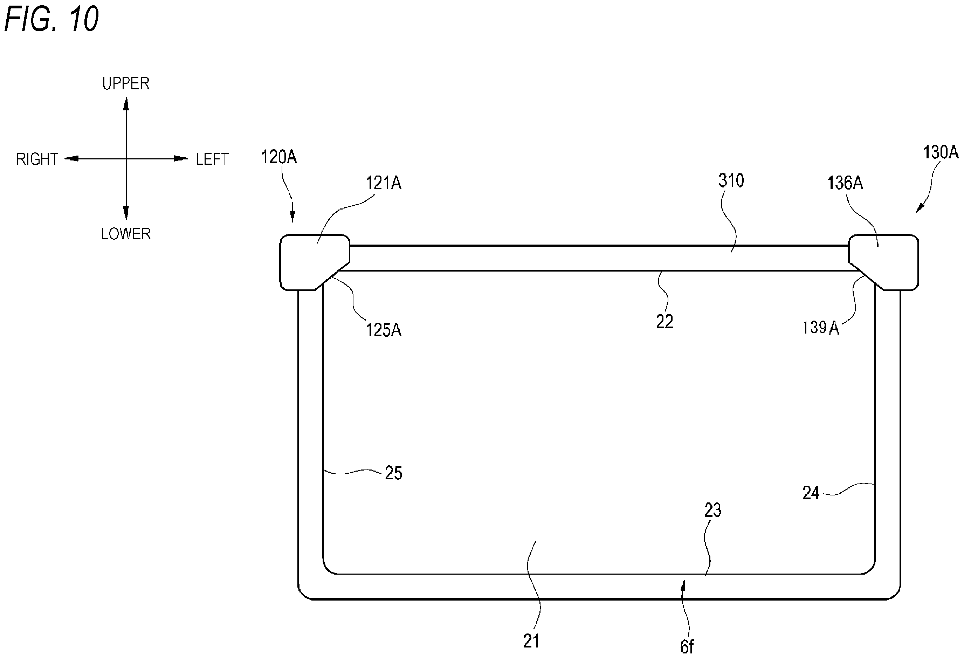

FIG. 10 is a diagram showing a second modification of attachment positions of the first cleaner device and the first air curtain device to the front LiDAR 6f. As shown in FIG. 10, to the front LiDAR 6f, a liquid nozzle 121A of a first cleaner device 120A may be disposed at a corner between the upper side 22 and the right side 25 of the cleaning surface 21, and an air nozzle 136A of a first air curtain device 130A may be disposed at a corner between the upper side 22 and the left side 24 of the cleaning surface 21. The arrangement of the first cleaner device 120A and the first air curtain device 130A may be reversed. According to this configuration, since an ejection port 125A of the liquid nozzle 121A and an ejection port 139A of the air nozzle 136A are arranged apart, it is possible to prevent air from being blown to the cleaning liquid at high speed. Accordingly, it is possible to prevent the cleaning liquid from being foamed by the ejection of the air similarly to the embodiment described earlier.

### Third Modification

Although the directions of the ejection ports of the liquid nozzle and the air nozzle are set perpendicular to each other for a single cleaning object in the embodiment described earlier, the present invention is not limited thereto.

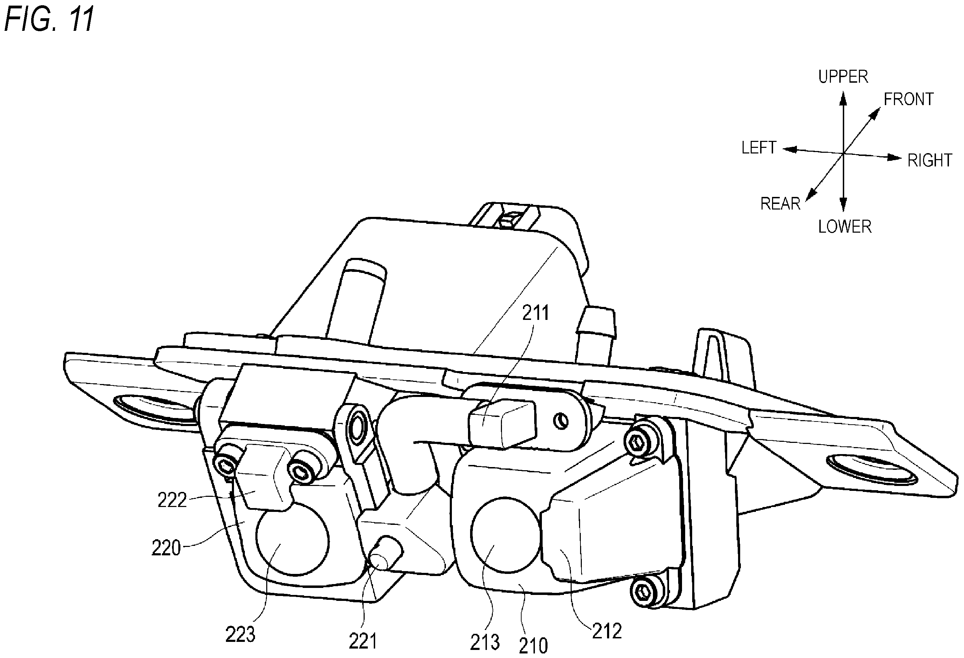

FIG. 11 is a perspective view showing a third modification in which directions of ejection ports of the liquid nozzle and the air nozzle are set perpendicular to each other for two cleaning objects arranged in parallel. As shown in FIG. 11, in a cleaner system according to the present example, a rear camera 210 and a reverse camera 220, which are cleaning objects, are combinedly provided, and ejection ports of liquid nozzles 211 and 221 of a cleaner device and ejection ports of air nozzles 212 and 222 of an air curtain device are set perpendicular to each other for the cameras.

The rear camera 210 and the reverse camera 220 are attached to the rear of the vehicle 1. The rear camera 210 is configured to acquire a relatively wide image of the rear side of the vehicle 1 continuously. For example, by the image from the rear camera 210, it is possible to confirm whether there is another vehicle that will overtake the host vehicle from behind. The reverse camera 220 is configured to acquire a nearby image behind the host vehicle when the vehicle 1 moves backward. For example, by the image from the reverse camera 220, it is possible to confirm whether there is an obstacle near the host vehicle during parking or the like.

The liquid nozzle 211 is provided above a lens 213 (cleaning surface) of the rear camera 210 and is configured to eject the cleaning liquid toward the lens 213. The air nozzle 212 is provided at a right side of the lens 213 of the rear camera 210 and is configured to eject air toward the lens 213. Directions of the ejection ports of the liquid nozzle 211 and the air nozzle 212 are set perpendicular to each other. An intersection angle between the directions of the ejection ports of the liquid nozzle 211 and the air nozzle 212 is in a range of 70° to 110°. The intersection angle is preferably 90°. The liquid nozzle 221 is provided at a right side of the lens 223 (cleaning surface) of the reverse camera 220 and is configured to eject the cleaning liquid toward the lens 223. The air nozzle 222 is provided above the lens 223 of the reverse camera 220 and is configured to eject air toward the lens 223. The directions of the ejection ports of the liquid nozzle 221 and the air nozzle 222 are set perpendicular to each other. An intersection angle between the directions of the ejection ports of the liquid nozzle 221 and the air nozzle 222 is in a range of 70° to 110°. The intersection angle is preferably 90°.

According to the cleaner systems according to the first to third modifications, even when air is ejected from the air nozzles 136, 136A, 212, and 222 during the ejection of the cleaning liquid, it is possible to prevent the cleaning liquid from being foamed by the ejection of the air. Accordingly, the cleaning objects can be effectively cleaned similarly to the cleaner system 100 according to the embodiment described earlier.

### Second Embodiment

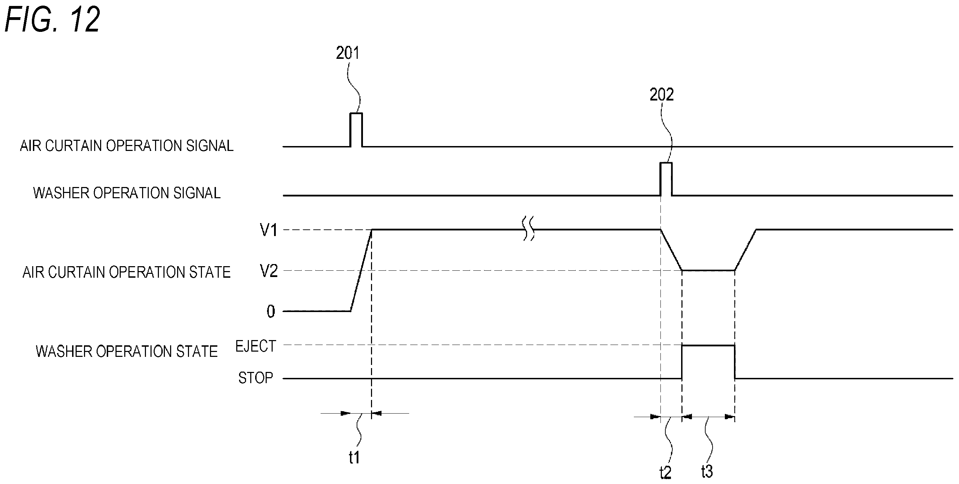

FIG. 12 is a timing chart showing a relationship among an air curtain operation signal, a washer operation signal, an air curtain operation state, and a cleaner operation state of a cleaner system 100A according to a second embodiment.

The air curtain operation signal shown in FIG. 12 is for operating an air curtain device. For example, the air curtain operation signal is transmitted from the integrative control unit 111 to an air curtain control unit of the first air curtain device 130. The washer operation signal is for operating a cleaner device. For example, the washer operation signal is transmitted from the integrative control unit 111 to a cleaner control unit of the first cleaner device 120.

The air curtain control unit of the first air curtain device 130 operates the air curtain motor 133 of the first air curtain device 130 based on an input of the air curtain operation signal. The air curtain motor 133 is operated to continuously blow air at a predetermined wind speed toward the cleaning surface 21 of the front LiDAR 6f from the air nozzle 136. The air curtain operation signal is transmitted from the integrative control unit 111, for example, when an ignition switch of the vehicle 1 is turned on or when a switch for operating the air curtain device is operated by the driver.

The cleaner control unit of the first cleaner device 120 operates a washer motor (an example of a second motor, not shown) of the first cleaner device 120 based on an input of the washer operation signal. The washer motor is operated to eject the cleaning liquid toward the cleaning surface 21 of the front LiDAR 6f from the liquid nozzle 121. The washer operation signal is transmitted from the integrative control unit 111, for example, when a switch for operating a cleaner device is operated by the driver. The washer operation signal is transmitted, for example, when dirt is detected by a dirt sensor configured to detect dirt on the cleaning surface 21 of the front LiDAR 6f or when dirt on the cleaning surface 21 is detected based on vehicle surrounding information acquired by the front LiDAR 6f. Further, the washer operation signal is transmitted, for example, when the self-driving mode is started, when bad weather is detected by a weather sensor, when a temperature decrease is detected by a thermometer, when a speed increase is detected by a vehicle speed sensor, when it is detected that the vehicle 1 enters expressway according to traffic information from a Japan Road Traffic Information Center (JARTIC).

Signals such as an on signal of the ignition switch, an on signal of the switch for operating an air curtain device and the like, and a detection signal of the dirt sensor are input into the vehicle control unit 3 and then input into the integrative control unit 111 via the vehicle control unit 3. The integrative control unit 111 transmits the air curtain operation signals and the washer operation signals based on these signals input via the vehicle control unit 3.

A vertical axis of the air curtain operation state shown in FIG. 12 indicates a wind speed V of air ejected from the first air curtain device 130. The washer operation state shown in FIG. 12 indicates whether the cleaning liquid is ejected from the liquid nozzle 121 (in an operation state) or not (in a stop state). The vertical axis of the air curtain operation state may indicate an air flow rate of the air ejected from the first air curtain device 130.

As shown in FIG. 12, when an air curtain operation signal 201 is output, the air curtain motor 133 is driven to start blowing air from the air nozzle 136 of the first air curtain device 130. The air ejected from the air nozzle 136 is, for example, ejected continuously at a predetermined wind speed V1. In the air curtain operation state in FIG. 12, it takes a time t1 for a wind speed to reach V1 from a start of the ejection of the air due to response characteristics of rotation of the impeller 132 to the rotation of the air curtain motor 133.

When a washer operation signal 202 is output during operation of the first air curtain device 130 (in this example, a state in which a wind speed is V1), the washer motor is driven to eject the cleaning liquid from the liquid nozzle 121 of the first cleaner device 120. The integrative control unit 111 performs control such that the ejection of the cleaning liquid from the liquid nozzle 121 is started when a time t2 has passed since the washer operation signal 202 rose. Ejection duration of the cleaning liquid from the liquid nozzle 121 is set to, for example, a predetermined time t3.

In this way, when the washer operation signal 202 is output during the operation of the first air curtain device 130 (in this example, a state in which a wind speed of ejected air is V1), the integrative control unit 111 reduces a wind speed of the air ejected from the air nozzle 136. Specifically, as shown in FIG. 12, a wind speed is reduced from the wind speed V1 to a wind speed V2. The integrative control unit 111 performs control such that the reduction in a wind speed of the air ejected from the air nozzle 136 is earlier than the cleaning liquid is ejected from the liquid nozzle 121 based on the washer operation signal 202. Specifically, in the present example, a start of the reduction in a wind speed of the air ejected from the air nozzle 136 is the time t2 earlier than the cleaning liquid is ejected from the liquid nozzle 121.

The time t2 corresponds to a time that it takes for a wind speed of the air ejected from the air nozzle 136 to be reduced from the wind speed V1 to the wind speed V2 due to the response characteristics of rotation of the impeller 132 to the rotation of the air curtain motor 133. The time t2 can be changed, for example, by controlling a drive voltage or a drive current of the air curtain motor 133.

The integrative control unit 111 performs control such that duration of the reduction in a wind speed of the air ejected from the air nozzle 136 is equal to or longer than duration of the ejection of the cleaning liquid from the liquid nozzle 121. In the present example, the duration of the reduction in a wind speed of the air ejected from the air nozzle 136 to the wind speed V2 is equal to the time t3 during which the cleaning liquid is ejected from the liquid nozzle 121. When the time t3 during which the cleaning liquid is ejected has passed, the integrative control unit 111 performs control such that a wind speed of the air ejected from the air nozzle 136 is increased from the wind speed V2 to the wind speed V1 after the ejection of the cleaning liquid from the liquid nozzle 121 is stopped. That is, in the present example, a wind speed is increased to the wind speed V1 when the time t3 has passed since the air started to be ejected at the wind speed V2.

As described above, the cleaner system 100A according to the second embodiment includes: the first cleaner device 120 configured to eject the cleaning liquid toward the front LiDAR 6f from the liquid nozzle 121; the first air curtain device 130 configured to continuously sends air to the front LiDAR 6f at a predetermined wind speed from the air nozzle 136 to prevents dirt from adhering to the front LiDAR 6f; and the integrative control unit 111 configured to control the first cleaner device 120 and the first air curtain device 130. The integrative control unit 111 is configured to control the first air curtain device 130 to reduce a wind speed of the air ejected from the air nozzle 136 while the cleaning liquid is being ejected from the liquid nozzle 121. According to this configuration, it is possible to prevent a foreign object from adhering to the front LiDAR 6f by an air curtain formed by an air ejected from the air nozzle 163 and to wash off an adhering foreign object with the cleaning liquid. In addition, it is possible to prevent an adverse effect of the air curtain, such as a problem that the cleaning liquid is foamed by the air continuously blown above a certain wind speed (air flow rate) during the ejection of the cleaning liquid and the foam from accumulating in the ejection port 125 of the liquid nozzle 121. Accordingly, it is possible to maintain ejection performance of the cleaning liquid.

The integrative control unit 111 starts to reduce a wind speed of the air ejected from the air nozzle 136 before the cleaning liquid is ejected from the liquid nozzle 121. According to this configuration, it is possible to more reliably prevent an adverse effect of the air curtain on the ejected cleaning liquid (for example, foaming of the cleaning liquid).

### Third Embodiment

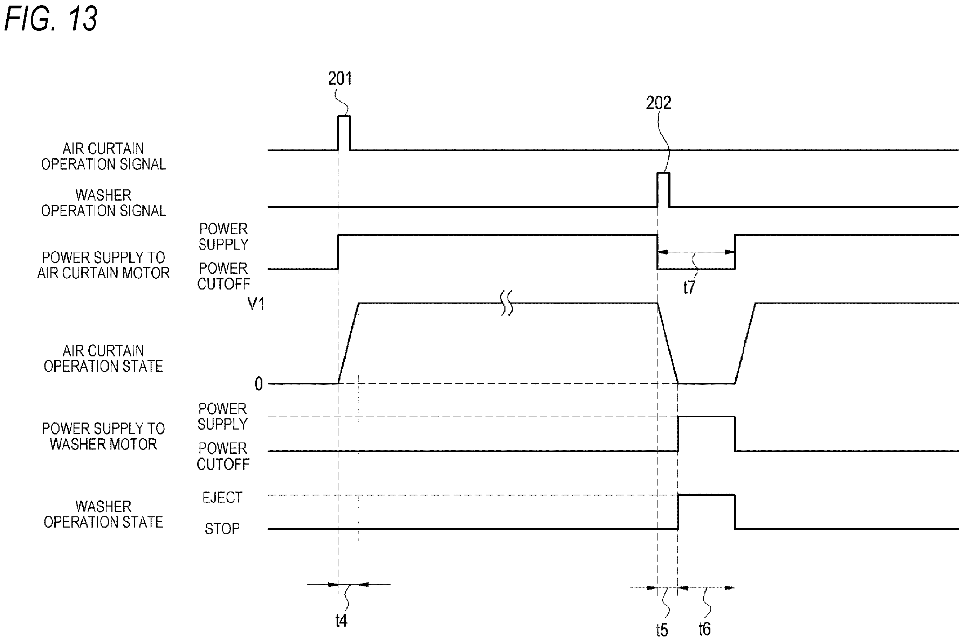

FIG. 13 is a timing chart showing a relationship among an air curtain operation signal, a washer operation signal, an air curtain operation state, and a cleaner operation state of a cleaner system 100B according to a third embodiment.

A power supply of the air curtain motor 133 shown in FIG. 13 indicates whether power is supplied to the air curtain motor 133 (in a power supply state) or not (in a power cutoff state). Similarly, a power supply of the washer motor indicates whether power is supplied to the washer motor. Other items in FIG. 13 are similar to the second embodiment.

As shown in FIG. 13, when the air curtain operation signal 201 is output, power is supplied to the air curtain motor 133, and air is started to be blown from the air nozzle 136 of the first air curtain device 130. The air is ejected from the air nozzle 136, for example, continuously at a predetermined wind speed V1. Similarly to the time t1 in the second embodiment, a time t4, which it takes for a wind speed to reach V1 from a start of the blowing in the air curtain operation state in FIG. 13, is due to the response characteristics of the impeller 132.

When the washer operation signal 202 is output during operation of the first air curtain device 130 (in the present example, a state in which a wind speed of the ejected air is V1), power is supplied to the washer motor, and the cleaning liquid is ejected from the liquid nozzle 121 of the first cleaner device 120. The integrative control unit 111 performs control such that the power supply to the washer motor is started when a time t5 has passed since the washer operation signal 202 rose. Ejection duration of the cleaning liquid from the liquid nozzle 121 is set to, for example, a predetermined time t6.

In this way, when the washer operation signal 202 is output during the operation of the first air curtain device 130 (in this example, in a state in which a wind speed of the ejected air is V1), the integrative control unit 111 stops the power supply to the air curtain motor 133. As a result, a wind speed of the air ejected from the air nozzle 136 is zero. The integrative control unit 111 performs control such that the cutoff of the power supply to the air curtain motor 133 is earlier than power is supplied to the washer motor based on the washer operation signal 202. In the present example, that the cutoff of the power supply to the air curtain motor 133 is the time t5 earlier than the power supply to the washer motor is started based on the washer operation signal 202.

Duration of the cutoff of the power supply to the air curtain motor 133 is set to, for example, a predetermined time t7. The integrative control unit 111 is configured to resume the power supply to the air curtain motor 133 when the time t7 during which power supply is stopped has passed. In the present example, the power supply to the air curtain motor 133 is resumed when the time t7 has passed since the washer operation signal 202 was output (rising of the washer operation signal 202). When the power supply to the air curtain motor 133 is resumed, air is started to be ejected from the air nozzle 136, and the air is continuously ejected at the wind speed V1.

The time t7, which it takes for the power supply to the air curtain motor 133 to be resumed, is set to be equal to or longer than a time obtained by adding the time t5, which it takes for a wind speed of the air ejected from the air nozzle 136 to be zero from the output of the washer operation signal 202, to the time t6, during which the cleaning liquid is being ejected. In the present example, the time t7 is set to be equal to the time obtained by adding the time t5 to the time t6. Therefore, in the present example, while the cleaning liquid is being ejected, blowing from the air nozzle 136 is stopped, that is, a wind speed is set to zero.

As described above, the integrative control unit 111 of the cleaner system 100B according to the third embodiment is configured to stop the power supply to the air curtain motor 133 configured to drive the first air curtain device 130 based on the washer operation signal 202 for operating the first cleaner device 120. According to this configuration, similarly to the cleaner system 100A according to the second embodiment, it is possible to prevent an adverse effect of the air curtain during the ejection of the cleaning liquid and to maintain the ejection performance of the cleaning liquid.

The integrative control unit 111 of the cleaner system 100B is configured to stop, based on the washer operation signal 202, the power supply to the air curtain motor 133 of the first air curtain device 130 before the power supply to the washer motor configured to drive the first cleaner device 120 is started. Accordingly, it is possible to more reliably curb the adverse effect of the air curtain during the ejection of the cleaning liquid.

The integrative control unit 111 of the cleaner system 100B is configured to resume the power supply to the air curtain motor 133 when a predetermined time (time t7) has passed since the washer operation signal 202 was received. According to this configuration, it is possible to easily resume the blowing by the first air curtain device 130 and to more effectively prevent a foreign object from adhering to the front LiDAR 6f by resuming operation of the air curtain after an adhering foreign object is washed off with the cleaning liquid.

According to the cleaner system 100B, the predetermined time (time t7), which it takes for the power supply to the air curtain motor 133 to be resumed, is set to be equal to or longer than the time obtained by adding the time (time t5) that it takes for the first air curtain device 130 to stop from receipt of the washer operation signal 202, to a time (time t6) during which the cleaning liquid is being ejected. Therefore, the blowing from the air nozzle 136 is stopped at least while the cleaning liquid is being ejected, and thus it is possible to minimize the adverse effect of the air curtain during the ejection of the cleaning liquid. In addition, since the blowing is resumed after the cleaning liquid is ejected, it is possible to prevent a foreign object from adhering to the cleaning surface 21 by the air curtain effectively.

### Fourth Example

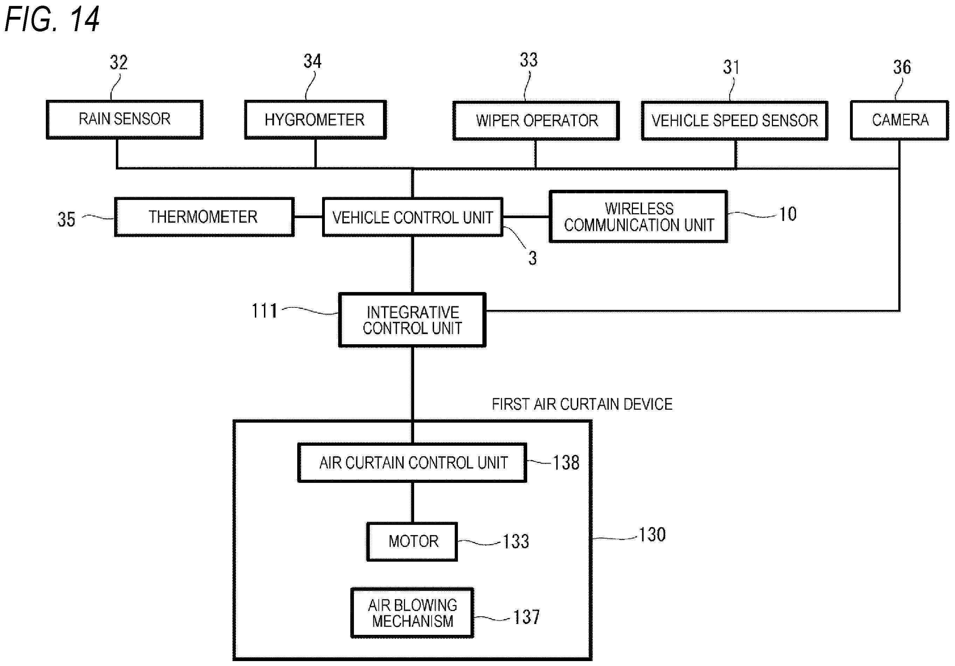

Next, a function of an air curtain device according to a fourth example will be described in detail with reference to FIG. 14. FIG. 14 is a block diagram showing a first air curtain device 130. As shown in FIG. 14, the first air curtain device 130 includes: an air blowing mechanism 137; a motor 133 configured to drive the air blowing mechanism 137; and an air curtain control unit 138 configured to control the motor 133 in accordance with a predetermined condition.

To the vehicle control unit 3, a vehicle speed sensor 31 is connected. To the vehicle control unit 3, rain sensor 32 configured to detect whether it is raining around the host vehicle; a hygrometer 34 configured to measure humidity around the host vehicle; a thermometer 35 configured to measure a temperature around the host vehicle; a camera 36 configured to acquire an image around the host vehicle (including, for example, the front camera 6c, the rear camera 6d, a side camera, and the like); and the like are further connected. To the vehicle control unit 3, a wiper operator 33, which is an input unit of the HMI 8, is further connected. To the vehicle control unit 3, a wireless communication unit 10 configured to acquire weather information about surroundings of the host vehicle from an external infrastructure device is further connected.

The camera 36 may be connected to the integrative control unit 111. For example, a signal for notifying whether each camera can normally acquire an image around the host vehicle is input from the camera 36 to the integrative control unit 111. A signal indicating that an image cannot be normally acquired due to a foreign object adhering to the camera or another signal indicating that an image can be normally acquired may be input instead into the integrative control unit 111.

Information detected by the sensors 31, 32, 34, 35, and 36 and information output from the wiper operator 33 are input into the integrative control unit 111 via the vehicle control unit 3. As for "input via the vehicle control unit 3," information may be input into the integrative control unit 111 without being processed by the vehicle control unit 3, or information that is different from information from the sensors 31, 32, 34, 35, and 36 or information from the wiper operator 33 may be input into the integrative control unit 111 after the vehicle control unit 3 perform some processing based on information acquired by the vehicle control unit 3 from the sensors 31, 32, 34, 35, and 36 and information acquired by the vehicle control unit 3 from the wiper operator 33. The integrative control unit 111 generates an operation signal for operating the first air curtain device 130 based on the input information and transmits the generated operation signal to the air curtain control unit 138. The air curtain control unit 138 controls the operation of the motor 133 based on the operation signal output from the integrative control unit 111.

In the following, a case will be described in which the first air curtain device 130 is operated based on vehicle speed information detected by the vehicle speed sensor 31.

When an ignition switch is operated and an ignition on signal is input into the vehicle control unit 3, the vehicle control unit 3 transmits vehicle speed information output from the vehicle speed sensor 31 to the integrative control unit 111. The integrative control unit 111 sets a wind speed of the air continuously blown from the air nozzle 136 of the first air curtain device 130 toward the cleaning surface 21 of the front LiDAR 6f based on the input vehicle speed information.

The set wind speed refers to a wind speed at which an air curtain for preventing a foreign object, such as dust and a drop of water, from adhering to the cleaning surface 21 of the front LiDAR 6f can be produced. Therefore, the set wind speed is changed in accordance with a vehicle speed. When a vehicle speed is low, the set wind speed is low. When a vehicle speed is high, the set wind speed is high. For example, the setting of a wind speed may be performed continuously in accordance with the vehicle speed information input continuously or may be performed at a predetermined cycle.

The integrative control unit 111 transmits an operation signal for blowing air at the set wind speed to the air curtain control unit 138 of the first air curtain device 130. The air curtain control unit 138 controls the motor 133 so as to blow air at the set wind speed based on the input operation signal.

Although a wind speed is set in accordance with a vehicle speed in the present example, the present invention is not limited thereto. For example, the air curtain control unit 138 may set an air flow rate according to a vehicle speed. The air curtain control unit 138 may set a drive voltage or a drive current of the motor 133 in accordance with a vehicle speed. The drive voltage or the drive current of the motor 133 may set a wind speed or an air flow rate of air output from the air curtain device. If a brushless motor is used as the motor 133, the air curtain control unit 138 controls the brushless motor by pulse-width modulation (PWM) control. For example, the air curtain control unit 138 can control a duty cycle in accordance with a vehicle speed and control a wind speed or an air flow rate of the air output from the air curtain device. Operation of the first air curtain device 130 has been described in the present example, and other air curtain devices are operated similarly.

Considering the operation of the air curtain device described above, the inventors found that a minimum wind speed or the like required to produce the air curtain depends on circumstances. For example, when a vehicle speed is fast, it is necessary to increase a wind speed of the air blown from the air curtain device in order to produce an air curtain to protect a cleaning object from dust mixed with the air blown toward the cleaning object. On the contrary, when a vehicle speed is slow, an air curtain can be produced even when a wind speed of the air blown from the air curtain device is slow.

Since the air curtain device is required to continuously operate, minimizing power consumption of the air curtain device is preferable. In particular, a self-driving car is equipped with many external sensors and thus, many cleaning objects, thereby the number of air curtain devices mounted on the vehicle being great.

Therefore, the inventors considered how to reduce the power consumption of the air curtain device with a minimum function of preventing a foreign object from adhering to a cleaning object maintained.

Therefore, according to the first air curtain device 130 in the present example, a wind speed and an air flow rate of the air blown toward the cleaning object or the drive voltage and the drive current of the motor are set according to a vehicle speed. Therefore, it is possible to operate the first air curtain device 130 with a wind speed, an air flow rate, the drive voltage, and the drive current set minimum for maintaining the air curtain in accordance with traveling circumstances (traveling speed). As a result, the power consumption of the first air curtain device 130 can be reduced. Accordingly, even if the number of cleaning objects (such as sensors) and the number of air curtain devices mounted on the vehicle is great, the power consumption of the cleaner system 100 equipped with the air curtain devices can be reduced.

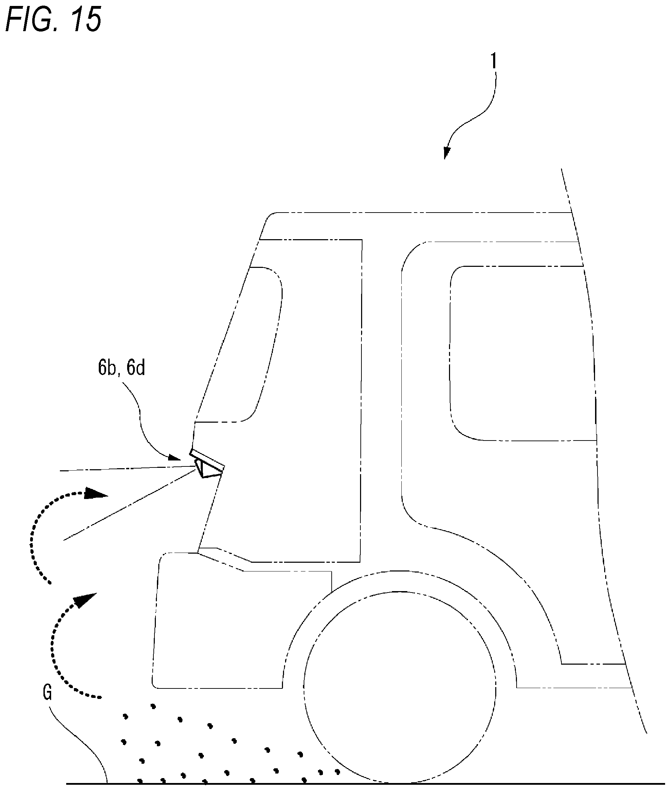

FIG. 15 is a side view showing the rear of the vehicle 1. As shown in FIG. 15, the rear LiDAR 6b and the rear camera 6d are attached to the rear of the vehicle 1 as the cleaning objects.

The rear LiDAR 6b and the rear camera 6d are attached at a relatively low position, for example, about 850 mm from a ground G. In general, during traveling of the vehicle 1, dust on the ground G is less prone to be whirled up when the vehicle 1 travels at low speed and is prone to be whirled up when the vehicle 1 travels at high speed. Therefore, when the vehicle 1 travels at low speed (for example, 60 km/h or less), dust is less prone to adhere to the rear LiDAR 6b and the rear camera 6d. On the other hand, when the vehicle 1 travels at high speed (for example, 80 km/h or more), an airflow flowing on a surface of a vehicle body is detached in the rear of the vehicle to lower a (static) pressure, thereby air flowing around the rear LiDAR 6b and the rear camera 6d from surroundings including the ground G. Head laminar flow on a surface of the vehicle may be detached around the rear LiDAR 6b and the rear camera 6dto produce turbulent flow, thereby air flowing around the rear LiDAR 6b and the rear camera 6d from surroundings including the ground G. Therefore, during high-speed traveling of the vehicle 1, since dust is carried by the airflow, dust is prone to adhere to the rear LiDAR 6b and the rear camera 6d.

According to the third air curtain device 130, the fourth air curtain device 190, and the cleaner system 100 according to the present example, since air can be blown toward the rear LiDAR 6b and the rear camera 6d at a suitable wind speed corresponding to a vehicle speed, it is possible to prevent dust whirled up from the ground G from adhering to the rear camera and the rear LiDAR.

For example, when a vehicle speed is 60 km/h or less, the third curtain device 170 and fourth air curtain device 190 are operated at a first wind speed. When a vehicle speed is higher than 60 km/h and is 80 km/h or less, the third curtain device 170 and fourth air curtain device 190 are operated at a second wind speed higher than the first wind speed. When a vehicle speed exceeds 80 km/h, the third curtain device 170 and fourth air curtain device 190 are operated at a third wind speed higher than the second wind speed.

The vehicle control unit 3 may output the vehicle speed information acquired from the vehicle speed sensor 31 to the air curtain control unit 138 or may output, to the air curtain control unit, instructions for the vehicle control unit 3 to operate the air curtain devices 170 and 190 at one of the first, second, and third wind speeds according to a vehicle speed.

Although a wind speed or the like of the air blown to a cleaning object is continuously changed according to a traveling speed (vehicle speed) of the vehicle 1 soon after an ignition on signal is input to operate the air curtain device in the fourth example, the present disclosure is not limited thereto. For example, when the ignition on signal is input to operate the air curtain device, the air curtain device may be operated to blow air at a predetermined wind speed set in advance until a vehicle speed exceeds a threshold, and then a wind speed or the like of the air may be changed according to a vehicle speed.

For example, in the cleaner system 100 shown in FIG. 3, operation of each air curtain device may be started at different times. For example, the first air curtain device 130 to clean the front LiDAR 6f and the second air curtain device 150 to clean the front camera 6c may be started soon after the ignition on signal is input, and the third air curtain device 170 to clean the rear LiDAR 6b and the fourth air curtain device 190 to clean the rear camera 6d may be started as necessary (for example, when a vehicle speed exceeds a threshold).

Although an operation signal for operating the first air curtain device 130 is generated by the integrative control unit 111 based on the information output from the sensors 31, 32, 34, 35, and 36 and the information output from the wiper operator 33 in the fourth example, the present disclosure is not limited thereto. The operation signal may be generated, for example, by the vehicle control unit 3. In this case, the vehicle control unit 3 transmits the generated operation signal to the air curtain control unit 138 via the integrative control unit 111. The air curtain control unit 138 controls operation of the motor 133 based on the operation signal output from the vehicle control unit 3.

For example, when an ignition switch is operated and an ignition on signal is input to the vehicle control unit 3, the vehicle control unit 3 generates an operation signal for operating the first air curtain device 130 based on information output from the sensors 31, 32, 34, 35, and 36 and information output from the wiper operator 33. The vehicle control unit 3 transmits the generated operation signal to the integrative control unit 111. The integrative control unit 111 transmits the operation signal output from the vehicle control unit 3 to the air curtain control unit 138 without processing the operation signal. The air curtain control unit 138 controls the operation of the motor 133 based on the operation signal input into the air curtain control unit 138 via the integrative control unit 111.

Although the integrative control unit 111 and the air curtain control unit 138 are provided as separate components in the fourth example, the integrative control unit 111 and the air curtain control unit 138 may be integrated.

Although the air curtain device is included in the cleaner system 100 in the fourth example, the present disclosure is not limited thereto. For example, the air curtain device and the cleaner device may be mounted on the vehicle 1 independently. Alternatively, only the air curtain device may be mounted on the vehicle 1. In these cases, the air curtain control unit of the air curtain device is configured to directly acquire, from the vehicle control unit 3, an operation signal generated based on the information output from the sensors 31, 32, 34, 35, and 36 and the information output from the wiper operator 33.

Although air is continuously blown toward the cleaning object from the air curtain device in the fourth example, the present disclosure is not limited thereto. Dirt may adhere to the cleaning object even if air is continuously ejected from the air nozzle 136 or when the cleaner system 100 is not operating. Therefore, for example, when it is determined that dirt adhered to the cleaning object and the cleaning liquid is ejected from the first cleaner device 120 toward the cleaning object, the cleaning objects are cleaned by the cleaner devices 120, 140, 160, and 180. At this time, the first air curtain device 130 may be configured to intermittently eject high-pressure air toward the cleaning object.

Although the air curtain device is operated based on the vehicle speed information detected by the vehicle speed sensor 31 in the fourth example, the present disclosure is not limited thereto. The air curtain device may be operated, for example, based on a detection result of the rain sensor 32 configured to detect whether it is raining around the host vehicle.

The integrative control unit 111 sets a wind speed of the air continuously blown from the air nozzle 136 of the first air curtain device 130 toward the cleaning surface 21 of the front LiDAR 6f based on the detection result output from the rain sensor 32. For example, when it is detected that it is raining around the host vehicle, the integrative control unit 111 sets a wind speed of the air blown from the first air curtain device 130 toward the front LiDAR 6f for V1 in order to prevent a drop of rain from adhering to the front LiDAR 6f. When it is detected that it is not raining around the host vehicle, the integrative control unit 111 sets a wind speed of the air blown from the first air curtain device 130 toward the front LiDAR 6f for V2, which is lower than V1, in order to prevent dust from adhering to the front LiDAR 6f.

The integrative control unit 111 transmits an operation signal for blowing air at a set wind speed to the air curtain control unit 138 of the first air curtain device 130. The air curtain control unit 138 controls the motor 133 to blow air at the set wind speed based on the input operation signal.

The air curtain device may be operated based on, for example, a wiper operation signal output from the wiper operator 33.

The integrative control unit 111 sets a wind speed of the air continuously blown from the air nozzle 136 of the first air curtain device 130 toward the cleaning surface 21 of the front LiDAR 6f based on a signal output from the wiper operator 33. For example, when the wiper operation signal is output indicating that a wiper is operating, the integrative control unit 111 determines that it is raining around the host vehicle to set a wind speed of the air blown from the first air curtain device 130 toward the front LiDAR 6f for V1 similarly to the case of the rain sensor 32. When the wiper operation signal is not output, the integrative control unit 111 determines that it is not raining around the host vehicle to set a wind speed of the air blown from the first air curtain device 130 toward the front LiDAR 6f for V2, which is lower than V1, similarly to the case of the rain sensor 32. The processing after the integrative control unit 111 transmits the operation signal to the air curtain control unit 138 is similar to the case of the rain sensor 32.

The air curtain device may be operated, for example, based on weather information acquired by the wireless communication unit 10.

The integrative control unit 111 determines whether it is raining around the host vehicle based on the weather information received from an infrastructure facility to set a wind speed of the air continuously blown from the air nozzle 136 of the first air curtain device 130 toward the cleaning surface 21 of the front LiDAR 6f. The processing performed by the integrative control unit 111 and the like when the weather information is acquired indicating that it is raining or not raining around the host vehicle is similar to the processing when the rain sensor 32 detects that it is raining or not raining around the host vehicle.

The air curtain device may be operated, for example, based on an image acquired by the camera 36.

The integrative control unit 111 determines whether it is raining or snowing based on analysis of an image around the vehicle captured by the camera 36 to set a wind speed of the air continuously blown from the air nozzle 136 of the first air curtain device 130 toward the cleaning surface 21 of the front LiDAR 6f. The processing performed by the integrative control unit 111 and the like when it is determined that it is raining or snowing is similar to the processing when the rain sensor 32 detects that it is raining around the host vehicle. The processing performed by the integrative control unit 111 and the like when it is determined that it is neither raining nor snowing is similar to the processing when the rain sensor 32 detects that it is not raining.

If snow adhered to the cleaning surface 21 of the front LiDAR 6f, the adhering snow may not be removed, for example, by ejecting the cleaning liquid from the first cleaner device 120. Reliably preventing snow from adhering to the cleaning surface 21 is preferable when it is snowing. Therefore, when it is determined that it is snowing based on analysis of the image around the vehicle, a wind speed of the air blown from the first air curtain device 130 toward the front LiDAR 6f may be set for the wind speed V3, which is higher than the wind speed V1, which is set when it is determined that it is raining.

The air curtain device may be operated, for example, based on detection results of the hygrometer 34 and the thermometer 35.

The integrative control unit 111 determines whether it is snowing based on humidity detected by the hygrometer 34 and a temperature detected by the thermometer 35 to set a wind speed of the air continuously blown from the air nozzle 136 of the first air curtain device 130 toward the cleaning surface 21 of the front LiDAR 6f. For example, when humidity is higher than a predetermined value and a temperature is lower than a predetermined value, that is, when it is determined that it is snowing, a wind speed of the air blown toward the front LiDAR 6f may be set for the wind speed V3, which is higher than the wind speed V1, which is set when it is raining, similarly to the case in which it is determined that it is snowing based on analysis of the image around the vehicle. The wiper operation signal output from the wiper operator 33 may be used instead of the hygrometer 34, and it may be determined whether it is snowing based on the wiper operation signal and the thermometer 35.

As described above, when the air curtain device is operated based on the outputs of the rain sensor 32, the wiper operator 33, the wireless communication unit 10, the camera 36, the hygrometer 34, and the thermometer 35, the air curtain device can be operated with a minimum wind speed, a minimum air flow rate, a minimum drive voltage, and a minimum drive current for maintaining the air curtain in accordance with traveling circumstances. Accordingly, the power consumption can be reduced.

Further, the cleaner system may include an air curtain switch (manual switch) for operating the air curtain device as an input unit of the HMI 8. The integrative control unit 111 may generate an operation signal for operating the air curtain device based on an air curtain on signal output from the air curtain switch to transmit the generated operation signal to the air curtain control unit 138.

### Fifth Embodiment

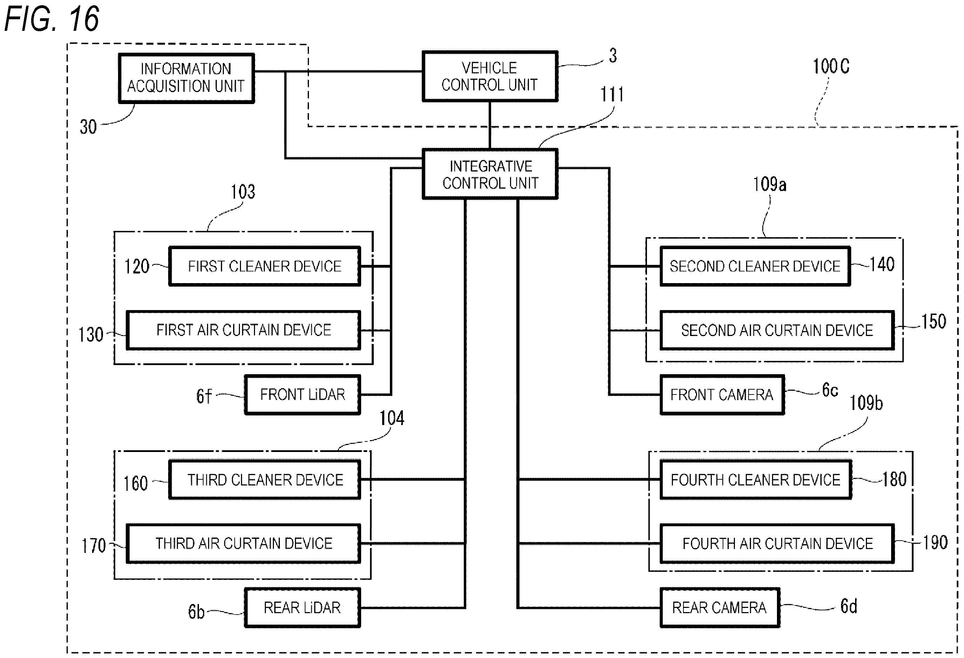

FIG. 16 is a block diagram showing an air curtain system 100C according to a fifth embodiment. The air curtain system 100C includes: an information acquisition unit 30 configured to acquire weather information; the cleaners 101 to 109b described above; and an integrative control unit 111 configured to control the cleaners 101 to 109b. In FIG. 16, out of the cleaners 101 to 109b described above, the front LC 103, the front camera cleaner unit 109a, the rear LC 104, and the rear camera cleaner unit 109b are shown, and the front WW 101, the rear WW 102, the right LC 105, the left LC 106, the right HC 107, and the left HC 108 are not shown.

The information acquisition unit 30 is, for example, thermometer configured to measure a temperature around the host vehicle, a hygrometer configured to measure humidity around the host vehicle, a rain sensor configured to detect whether it is raining around the host vehicle, a camera configured to acquire an image around the host vehicle, a LiDAR configured to detect a shape, a material, a color, or the like of an object, or the like. The information acquisition unit 30 is the wireless communication unit 10 configured to acquire information about weather around the host vehicle. As described above, the information acquisition unit 30 corresponds to the external sensor 6, the wireless communication unit 10, or the like shown in FIG. 2. In addition, the information acquisition unit 30 may be a wiper operation receiving unit configured to acquire a signal indicating that the wiper is operating. When the driver determines that the weather is bad, or it is raining or snowing, the driver operates the wiper operator. Thus, the information acquisition unit 30 acquires, as information indicating bad weather, a signal output when the wiper operator is operated or a signal indicating that the wiper is operating. The vehicle control unit 3 may automatically operate the wiper according to output of the camera, the rain sensor, or the like. The information acquisition unit 30 acquires a signal indicating that the wiper is operating when the vehicle control unit 3 operates the wiper. The information acquisition unit 30 is electrically connected to the integrative control unit 111 and the vehicle control unit 3.

In the present embodiment, the vehicle control unit 3 transmits the weather information acquired by the information acquisition unit 30 to the integrative control unit 111. The integrative control unit 111 may be electrically connected to the information acquisition unit 30. In this case, the integrative control unit 111 may control operation of the front LC 103, the front camera cleaner unit 109a, the rear LC 104, and the rear camera cleaner unit 109b based on the weather information acquired by the information acquisition unit 30.

The air curtain system 100C shown in FIG. 16 is equipped with various external sensors, such as the front LiDAR 6f and the front camera 6c. The air curtain system 100C may include: a cleaner device configured to remove a foreign object from a sensor (not shown), such as a side camera configured to acquire an image of the side of the vehicle 1; and an air curtain device configured to prevent a foreign object from adhering to the sensor.

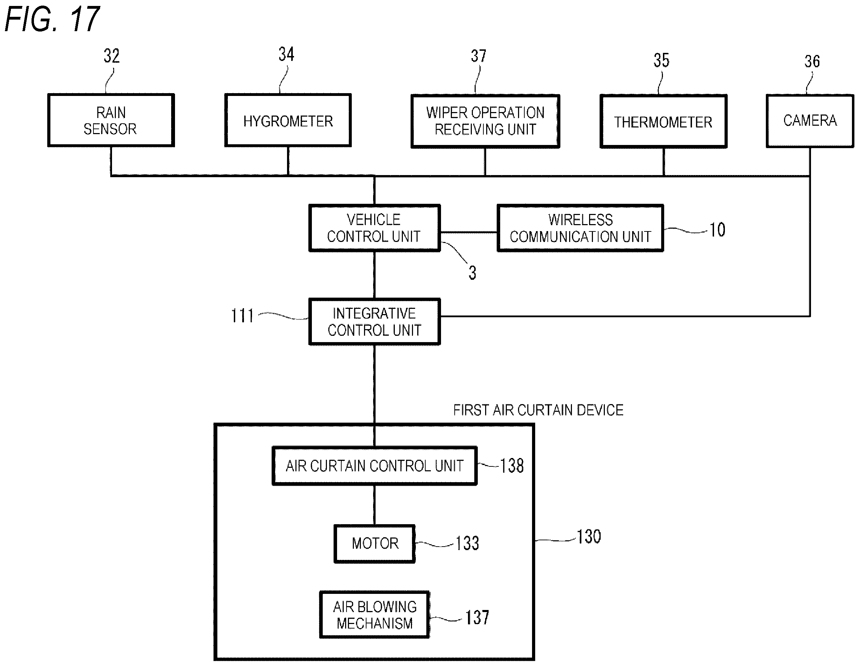

Next, a function of the air curtain device provided in the air curtain system 100C will be described in detail. FIG. 17 is a block diagram showing the first air curtain device 130. As shown in FIG. 17, the first air curtain device 130 includes: the air blowing mechanism 137; the motor 133 configured to drive the air blowing mechanism 137; and the air curtain control unit 138 configured to control the motor 133 in accordance with a predetermined condition.

The air curtain control unit 138 is connected to the integrative control unit 111. The integrative control unit 111 is connected to the vehicle control unit 3. To the vehicle control unit 3, the rain sensor 32, the hygrometer 34, a wiper operation receiving unit 37, the thermometer 35, the camera 36 (including, for example, the front camera 6c, the rear camera 6d, the side camera, and the like), the wireless communication unit 10, and the like configured to acquire weather information are connected.

The camera 36 configured to acquire an image around the host vehicle may be connected to the integrative control unit 111. For example, a signal for notifying whether each camera can normally acquire an image around the host vehicle is input from the camera 36 into the integrative control unit 111. A signal indicating that an image cannot be normally acquired due to a foreign object, such as ice (snow), mud, and dust, adhering to the camera 36 or another signal indicating that an image can be normally acquired may be input instead into the integrative control unit 111.

Information, for example, detected by the sensors 32, 34, and 35 and the camera 36 and information output from the wiper operation receiving unit 37 are input into the integrative control unit 111 via the vehicle control unit 3. As for "input via the vehicle control unit 3," information may be input into the integrative control unit 111 without being processed by the vehicle control unit 3, or information that is different from information from the sensors 32, 34, and 35 and the camera 36 or information from the wiper operation receiving unit 37 may be input into the integrative control unit 111 after the vehicle control unit 3 perform some processing based on information acquired by the vehicle control unit 3 from the sensors 32, 34, and 35 and the camera 36 or information from the wiper operation receiving unit 37. The integrative control unit 111 generates an operation signal for operating the first air curtain device 130 based on the input information to transmit the generated operation signal to the air curtain control unit 138. The air curtain control unit 138 controls operation of the motor 133 based on the operation signal input from the integrative control unit 111.

Next, operation of the air curtain device will be described. Operation of the first air curtain device 130 will be described in the following, and operation of the second to fourth air curtain devices 150, 170, and 190 is similar.

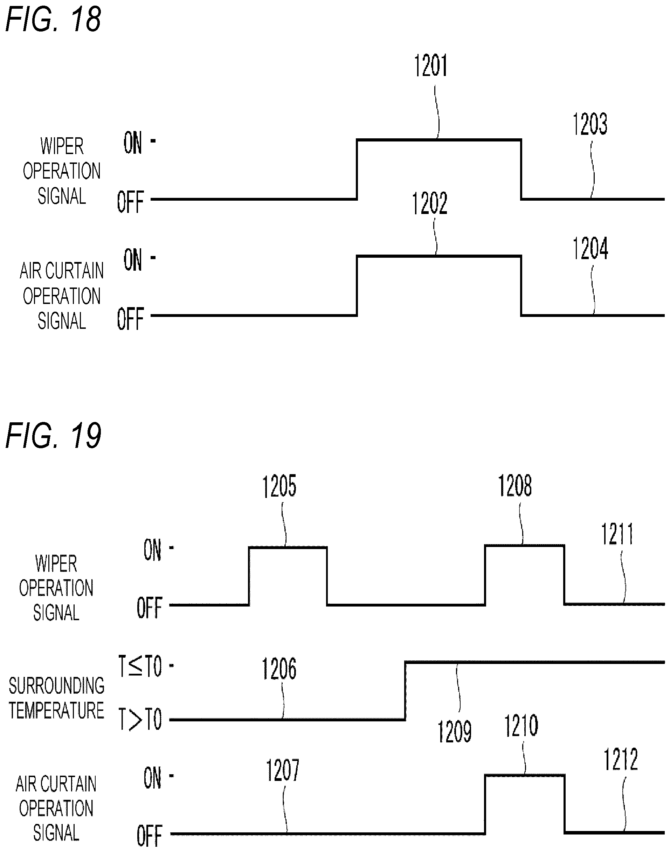

FIG. 18 is a timing chart showing a relationship between: a wiper operation signal that is received by the wiper operation receiving unit 37 and indicates that the wiper is operating; and an air curtain operation signal for operating the first air curtain device 130.

The wiper operation signal is, for example, high (on) when the driver turns on the wiper operator and is low (off) when the driver turns off the wiper operator. For example, if the vehicle control unit 3 automatically operates the wiper based on a predetermined condition, the wiper operation signal may be high or low depending on whether the predetermined condition is satisfied. The air curtain operation signal is high (on) when the first air curtain device 130 is operated and is low (off) when the first air curtain device 130 is stopped.

As shown in FIG. 18, for example, when the wiper operator is turned on by the driver, a wiper on signal 1201 indicating that the wiper operator is turned on is output from the wiper operator. The wiper on signal 1201 is input into the integrative control unit 111 via the vehicle control unit 3. The integrative control unit 111 determines whether the wiper is operating based on the input wiper on signal 1201. The wiper is operated since it is raining around the vehicle 1. Accordingly, the integrative control unit 111 outputs an air curtain on signal 1202 to operate the first air curtain device 130 when the integrative control unit 111 acquires the wiper on signal 1201. The output air curtain on signal 1202 is input into the air curtain control unit 138 of the first air curtain device 130. The air curtain control unit 138 operates the motor 133 to continuously blow air from the air blowing mechanism 137 toward the cleaning surface 21 of the front LiDAR 6f at a predetermined wind speed.

On the other hand, when the wiper operator is turned off by the driver, a wiper off signal 1203 indicating that the wiper operator is turned off is output from the wiper operator. The wiper off signal 1203 is input to the integrative control unit 111 via the vehicle control unit 3. The integrative control unit 111 determines whether the wiper is operating based on the input wiper off signal 1203. The wiper is turned off since it is not raining around the vehicle 1. Accordingly, the integrative control unit 111 outputs an air curtain off signal 1204 to stop the first air curtain device 130 when the integrative control unit 111 acquires the wiper off signal 1203. The output air curtain off signal 1204 is input into the air curtain control unit 138. The air curtain control unit 138 stops the motor 133 to stop the air blown toward the cleaning surface 21 of the front LiDAR 6f.

The air curtain system 100C according to the present embodiment includes: the first air curtain device 130 configured to prevent dirt from adhering to the front LiDAR 6f; the information acquisition unit 30 configured to acquire information indicating bad weather; and the integrative control unit 111 configured to control the first air curtain device 130. The integrative control unit 111 is configured to operate the first air curtain device 130 when it is determined that the wiper is operating based on the wiper operation signal acquired by the wiper operation receiving unit 37 (the information acquisition unit 30). According to this configuration, since the first air curtain device 130 can be operated only when it is determined that the weather is bad, or it is raining, the power consumption of the air curtain system 100C can be reduced.

Although the first air curtain device 130 is operated in accordance with operation of the wiper in the operation example described above, the present invention is not limited thereto. For example, the first air curtain device 130 may be operated based on the operation of the wiper and a temperature around the vehicle as below.

FIG. 19 is a timing chart showing a relationship among a wiper operation signal, temperature information indicating a temperature around the vehicle, and an air curtain operation signal.

The temperature information is an on/off signal output based on a temperature T around the vehicle 1 acquired by the thermometer 35. The temperature T around the vehicle 1 acquired by the thermometer 35 is input into the integrative control unit 111 via the vehicle control unit 3. The integrative control unit 111 outputs temperature information in accordance with whether the input temperature T is equal to or lower than a predetermined temperature T0 (for example, 0□). As the temperature information, the integrative control unit 111 outputs an on (high) signal when the temperature T around the vehicle 1 is lower than the predetermined temperature T0 and outputs an off (low) signal when the temperature T around the vehicle 1 is equal to or higher than the predetermined temperature T0. That is, the first air curtain device 130 is operated when the wiper is operating and an outside temperature is lower than or equal to the freezing point, or when it is inferred that it is snowing.

As shown in FIG. 19, the integrative control unit 111 is configured to operate the first air curtain device 130 only when the wiper on signal and the on temperature information are acquired.

When the integrative control unit 111 acquires the wiper on signal 1205 and the off temperature information (a signal 1206), it is inferred that it is raining but not snowing. Therefore, the integrative control unit 111 maintains the output of an air curtain off signal 1207 and does not operate the first air curtain device 130.

When the integrative control unit 111 acquires a wiper on signal 1208 and the on temperature information (a signal 1209), it is inferred that it is snowing. Therefore, the integrative control unit 111 outputs an air curtain on signal 1210 to operate the first air curtain device 130. The output air curtain on signal 1210 is input into the air curtain control unit 138. The air curtain control unit 138 operates the motor 133 to continuously blow air from the air blowing mechanism 137 toward the cleaning surface 21 of the front LiDAR 6f at a predetermined wind speed.

When the integrative control unit 111 acquires a wiper off signal 1211 and the on temperature information (signal 1209), it is inferred that an outside temperature is low but it is not snowing. Therefore, the integrative control unit 111 outputs an off signal 1212 to the first air curtain device 130 and does not operate the first air curtain device 130.

According to the air curtain system 100C, the integrative control unit 111 operates the first air curtain device 130 when it is determined, based on the wiper operation signal acquired by the wiper operation receiving unit 37 and the temperature around the vehicle acquired by the thermometer 35, that the temperature T outside the vehicle is equal to or lower than the predetermined temperature T0 (00) and the wiper is operating. According to this configuration, since the first air curtain device 130 can be operated only when it is determined that the weather is bad, or it is snowing, the power consumption of the air curtain system 100C can be reduced.

When it is determined that the wiper is operating (the wiper on signal 1205) and an outside temperature is high 1206, the on signal may be output to the first air curtain device 130 to continuously blow air at the predetermined wind speed V1 since it is inferred that it is raining around the vehicle 1, and when it is determined that the wiper is operating (the wiper on signal 1208) and an outside temperature is low 1209, the first air curtain device 130 may continuously blow air at the predetermined wind speed V2, which is higher than V1, since it is inferred that it is snowing around the vehicle 1, unlike in the operation example shown in FIG. 19.

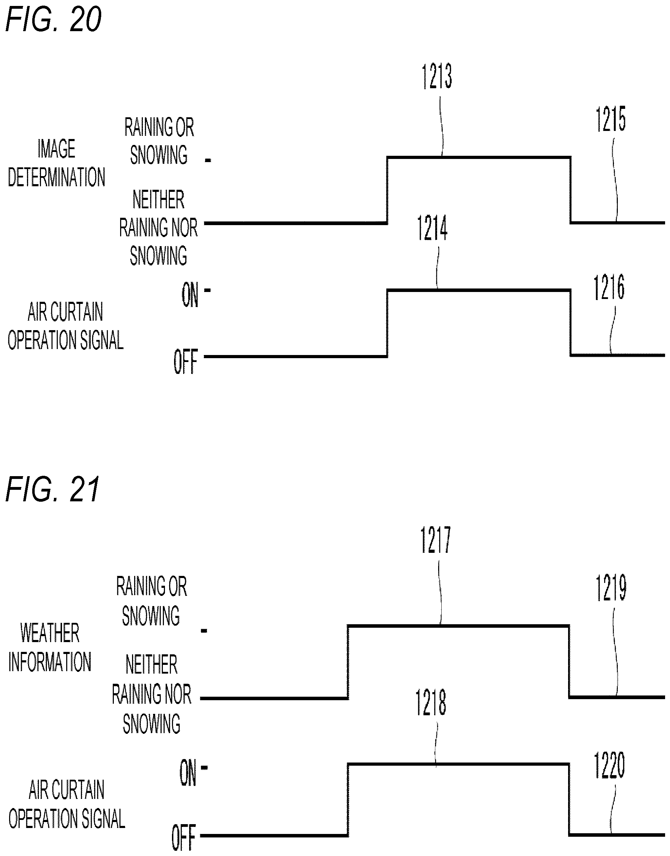

The first air curtain device 130 may be operated, for example, based on an image captured by the camera 36 as below. FIG. 20 is a timing chart showing a relationship between image determination and an air curtain operation signal.

The integrative control unit 111 is configured to analyze an image around the vehicle 1 acquired by the camera 36 to determine whether the weather is bad. When it is raining, the image captured by the camera 36 contains many streaks extending in the upper-lower direction. When it is snowing, the image captured by the camera 36 contains many streaks extending from the upper side to the lower side staggeringly in the left-right direction or many dots. For example, when the integrative control unit 111 detects more streaks extending in the upper-lower direction in the captured image than a predetermined number, the integrative control unit 111 determines that it is raining around the vehicle 1 to output a high signal (high output 1213). When the integrative control unit 111 detects more streaks extending from the upper side to the lower side staggeringly in the left-right direction or more dots in the captured image than a predetermined number, the integrative control unit 111 determines that it is snowing around the vehicle 1 to output a high signal (high output 1213). The integrative control unit 111 outputs a low signal (low output 1215) when it does not output a high signal.

As shown in FIG. 20, the integrative control unit operates the first air curtain device 130 when a high signal is output (High output 1213) based on the analysis of the image acquired by the camera 36 and does not operate the first air curtain device 130 when a low signal is output (Low output 1215).

According to the air curtain system 100C, the integrative control unit 111 analyzes the image captured by the camera 36 to operate the first air curtain device 130 only when the integrative control unit 111 determines that it is raining or snowing. According to this configuration, since the first air curtain device 130 can be operated only when it is determined that the weather is bad, or it is raining or snowing, the power consumption of the air curtain system 100C can be reduced.

The first air curtain device 130 may be operated, for example, based on weather information obtained by wireless communication as blow.

FIG. 21 is a timing chart showing a relationship between weather information and an air curtain operation signal.

The weather information is information about weather provided by an infrastructure facility around the vehicle 1. The wireless communication unit 10 of the vehicle 1 acquires the weather information from the infrastructure facility. The weather information acquired by the wireless communication unit 10 is input into the integrative control unit 111 via the vehicle control unit 3 or is directly input into the integrative control unit 111.

As shown in FIG. 21, when the integrative control unit 111 acquires weather information indicating that it is raining or snowing, the integrative control unit 111 outputs an on signal 1218 to the first air curtain device 130 to operate the first air curtain device 130. When the integrative control unit 111 acquires weather information indicating that it is not raining or snowing, the integrative control unit 111 outputs an off signal 1220 to the first air curtain device 130 and does not operate the first air curtain device 130.

According to the air curtain system 100C, the integrative control unit 111 operates the first air curtain device 130 when the weather information is acquired indicating that it is raining or snowing based on the weather information acquired by the wireless communication unit 10. According to this configuration, since the first air curtain device 130 can be operated only when it is determined that the weather is bad, or it is raining or snowing, the power consumption of the air curtain system 100C can be reduced.

Although the operation signal for operating the first air curtain device 130 is generated by the integrative control unit 111 based on the weather information acquired by the information acquisition unit 30 in the fifth embodiment, the present invention is not limited thereto. The operation signal may be generated, for example, by the vehicle control unit 3. In this case, the vehicle control unit 3 transmits the generated operation signal to the air curtain control unit 138 via the integrative control unit 111. The air curtain control unit 138 controls the operation of the motor 133 based on the operation signal output from the vehicle control unit 3.

Although the air curtain device is included in the air curtain system 100C in the fifth embodiment, the present invention is not limited thereto. For example, the air curtain device and the cleaner device may be mounted on the vehicle 1 independently. Alternatively, only the air curtain device may be mounted on the vehicle 1. In these cases, the air curtain control unit of the air curtain device is configured to directly acquire, from the vehicle control unit 3, the weather information acquired by the information acquisition unit 30.

Although the air curtain device has been described in which air is continuously and constantly ejected during operation in the fifth embodiment, the present invention is not limited thereto. For example, the first air curtain device may be configured to eject high-pressure air toward the cleaning object intermittently. Dirt may adhere to the cleaning object even if air is continuously or intermittently ejected from the air nozzle 163 or when the air curtain system 100C is not operating. Therefore, for example, when it is determined that dirt adhered to the cleaning object or when an input from a driver for operating a cleaner device is received, the cleaning liquid may be ejected from the cleaner device toward the cleaning object and then the high-pressure air may be intermittently ejected from the air curtain device to remove the dirt adhering to the cleaning object.

### Various Modifications

Embodiments of the present invention have been described above. It goes without saying that a technical scope of the present invention should not be limitedly interpreted by the description of the embodiments. It is to be understood by those skilled in the art that the embodiments are simply examples and various modifications may be made within the scope of the invention described in the claims. The technical scope of the present invention should be determined based on the scope of the invention described in the claims.

Although the driving modes of the vehicle according to the above embodiments include: the full automation mode; the advanced driver assistance mode; the driver assistance mode; and the manual driving mode, the driving modes of the vehicle should not be limited to these four modes. The driving modes of the vehicle may include at least one of these four modes. For example, only one driving mode of the vehicle may be executed.

Further, a classification and a name of the driving modes of the vehicle may be changed according to laws or regulations concerning self-driving in each country, as appropriate. Similarly, definitions of the "full automation mode," the "advanced driver assistance mode," and the "driver assistance mode" in the description of the embodiments are simply examples and may be changed according to laws or regulations concerning self-driving in each country, as appropriate.

Although the cleaner system 100 or the air curtain system 100C is mounted on a vehicle configured to travel in self-driving mode in the above embodiments, the cleaner system 100 or the air curtain system 100C may be mounted on a vehicle incapable of traveling in self-driving mode.

Although the cleaner system 100 includes the external sensor 6 in the above embodiments, the cleaner system 100 may not include the external sensor 6. However, the cleaner system 100 provided as a unit including the external sensor 6is preferable since positioning accuracy of the cleaners 103 to 106, 109a, and 109b to the external sensor 6 can be improved. In addition, assemblability to the vehicle 1 is improved since the external sensor 6 can be attached to the vehicle 1 together with the cleaner system 100.

Although a device configured to clean the LiDARs 6f, 6b, 6r, and 61, a device configured to clean the front camera 6c, and a device configured to clean the rear camera 6d have been described as a cleaner or an air curtain device configured to clean the external sensor 6 and prevent dirt from adhering to the external sensor 6 in the above embodiments, the present invention is not limited thereto. The cleaner system 100 may include a cleaner, an air curtain device, or the like configured to clean a radar and the like, instead of or together with the sensor cleaners 103 to 106, 109a, and 109b or may include the cleaner, the air curtain device.

The external sensor 6, such as the LiDARs 6f, 6b, 6r, and 61, may have a detection surface and a cover covering the detection surface. A cleaner or an air curtain device configured to clean the external sensor 6 and prevent dirt from adhering to the external sensor 6 may be configured to clean (blow air to) the detection surface or to clean (blow air to) the cover covering the sensor.

The cleaning liquid ejected from the cleaner system 100 contains water or detergent. Cleaning media ejected toward the front window 1f, the rear window 1b, the headlamps 7r and 71, the LiDARs 6f, 6b, 6r, and 61, and the cameras 6c and 6d may be different or the same.

The cleaners 101 to 109b are provided with one or more ejection ports for ejecting cleaning medium. The cleaners 101 to 109b may be provided with one or more ejection ports for ejecting the cleaning liquid and one or more ejection ports for ejecting air.

The cleaners 101 to 109b may be individually provided, or some of the cleaners may be unitized. For example, the right LC 105 and the right HC 107 may be a single unit. If the right headlamp 7r and the right LiDAR 6r are integrated, the right LC 105 and the right HC 107 may be a single unit.

The present application is based on Japanese Patent Application Nos. 2019-113841, 2019-113842, 2019-113843, and 2019-113844, filed on June 19, 2019.

## Claims

1. A vehicular air curtain system (100) comprising:
a vehicular air curtain device (130, 150, 170, 190) configured to send air continuously to a sensor (6) or a sensor cover mounted on a vehicle (1) at a predetermined wind speed or a predetermined air flow rate to prevent dirt from adhering to the sensor (6) or the sensor cover;
an information acquisition unit (30) configured to acquire information indicating bad weather; and
a control unit (111) configured to control the vehicular air curtain device, wherein
the control unit (111) operates the vehicular air curtain device (130, 150, 170, 190) based on the information indicating bad weather acquired by the information acquisition unit (30); **characterized in that**
the information acquisition unit (30) is configured to acquire output of a thermometer (35) configured to acquire a temperature outside the vehicle (1) and a wiper operation signal for operating a wiper, and
the control unit (111) operates the vehicular air curtain device (130, 150, 170, 190) when the temperature outside the vehicle (1) is equal to or lower than a predetermined temperature and the wiper is operating.

## Patentansprüche

1. Fahrzeugluftvorhangsystem (100), umfassend:
eine Fahrzeugluftvorhangvorrichtung (130, 150, 170, 190), die konfiguriert ist, um Luft kontinuierlich an einen Sensor (6) oder an eine Sensorabdeckung, die auf einem Fahrzeug (1) montiert ist, mit einer vorbestimmten Windgeschwindigkeit oder einem vorbestimmten Luftdurchsatz zu schicken, um zu verhindern, dass Schmutz an dem Sensor (6) oder der Sensorabdeckung haftet;
eine Informationserfassungseinheit (30), die konfiguriert ist, um Informationen zu erfassen, die schlechtes Wetter anzeigen; und
eine Steuereinheit (111), die konfiguriert ist, um die Fahrzeugluftvorhangvorrichtung zu steuern, wobei
die Steuereinheit (111) die Fahrzeugluftvorhangvorrichtung (130, 150, 170, 190) basierend auf den Informationen betreibt, die schlechtes Wetter anzeigen, erfasst durch die Informationserfassungseinheit (30); **dadurch gekennzeichnet, dass**
die Informationserfassungseinheit (30) konfiguriert ist, um den Ausgang eines Thermometers (35) zu erfassen, das konfiguriert ist, um eine Temperatur außerhalb des Fahrzeugs (1) und ein Wischerbetriebssignal zum Betreiben eines Wischers zu erfassen, und
die Steuereinheit (111) die Fahrzeugluftvorhangvorrichtung (130, 150, 170, 190) betreibt, wenn die Temperatur außerhalb des Fahrzeugs (1) gleich wie oder geringer als eine vorbestimmte Temperatur ist und der Wischer in Betrieb ist.

## Revendications

1. Système de rideau d'air de véhicule (100) comprenant :
un dispositif de rideau d'air de véhicule (130, 150, 170, 190) configuré pour envoyer l'air de manière continue vers un capteur (6) ou un couvercle de capteur monté sur un véhicule (1) à une vitesse d'air prédéterminée ou à un débit d'air prédéterminée pour empêcher la saleté d'adhérer sur le capteur (6) ou le couvercle de capteur ;
une unité d'acquisition d'information (30) configurée pour acquérir une information indiquant une météo défavorable ; et
une unité de commande (111) configurée pour commander le dispositif de rideau d'air de véhicule, dans lequel :
l'unité de commande (111) actionne le dispositif de rideau d'air de véhicule (130, 150, 170, 190) sur la base de l'information indiquant la météo défavorable acquise par l'unité d'acquisition d'information (30) ; **caractérisé en ce que** :
l'unité d'acquisition d'information (30) est configurée pour acquérir le résultat d'un thermomètre (35) configuré pour acquérir une température à l'extérieur du véhicule (1) et un signal de fonctionnement d'essuie-glace pour actionner un essuie-glace, et
l'unité de commande (111) actionne le dispositif de rideau d'air de véhicule (130, 150, 170, 190) lorsque la température à l'extérieur du véhicule (1) est égale ou inférieure à une température prédéterminée et que l'essuie-glace fonctionne.
